(19) 

Europäisches
Patentamt
European
Patent Office
Office européen
des brevets

(11) **EP 4 428 760 A1**

(12) **EUROPEAN PATENT APPLICATION**
published in accordance with Art. 153(4) EPC

(43) Date of publication:
**11.09.2024 Bulletin 2024/37**

(21) Application number: **22906493.6**

(22) Date of filing: **12.12.2022**

(51) International Patent Classification (IPC):
**G06N 3/08** (2023.01)

(52) Cooperative Patent Classification (CPC):
**G06N 3/0464; G06N 3/08; G06N 3/084**

(86) International application number:
**PCT/CN2022/138377**

(87) International publication number:
**WO 2023/109748 (22.06.2023 Gazette 2023/25)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **15.12.2021 CN 202111535584**

(71) Applicant: **Huawei Technologies Co., Ltd.
Shenzhen, Guangdong 518129 (CN)**

(72) Inventors:
- **CHEN, Guanfu
 Shenzhen, Guangdong 518129 (CN)**
- **CHEN, Minqi
 Shenzhen, Guangdong 518129 (CN)**
- **HUANG, Zeyi
 Shenzhen, Guangdong 518129 (CN)**
- **TANG, Shaohua
 Shenzhen, Guangdong 518129 (CN)**

(74) Representative: **Körber, Martin Hans
 Mitscherlich PartmbB
 Patent- und Rechtsanwälte
 Karlstraße 7
 80333 München (DE)**

(54) **NEURAL NETWORK ADJUSTMENT METHOD AND CORRESPONDING APPARATUS**

(57) This application discloses a neural network adjustment method, applied to an AI model training process. In the adjustment method, a first neural network including a plurality of scale layers is obtained. The first neural network uses a mixed precision operation, and each scale layer has a scaling scale. In a back propagation direction, a weight gradient of an operator in each scale layer is determined based on a corresponding scaling scale. For example, a scaling scale of a corresponding scale layer is adjusted based on performance of a weight gradient in an FP16 (for example, whether there is an INF or a NAN). In this way, a gradient underflow rate of the FP16 can be effectively reduced by using a small calculation amount, so that mixed precision training can be well applied to neural network training. According to technical solutions provided in this application, training efficiency is improved while high training precision is maintained. In addition, data that uses a low precision operation needs to occupy only small storage space on a chip. This is also conducive to fast reading and writing of data that uses the low precision operation by the chip.

FIG. 6

# Description

This application claims priority to Chinese Patent Application No. 202111535584.9, filed with the China National Intellectual Property Administration on December 15, 2021 and entitled "NEURAL NETWORK ADJUSTMENT METHOD AND CORRESPONDING APPARATUS", which is incorporated herein by reference in its entirety.

## TECHNICAL FIELD

This application relates to the field of computer technologies, and specifically, to a neural network adjustment method and a corresponding apparatus.

## BACKGROUND

Applying mixed precision to neural network training means that two or more operations of different precision are applied in a mixed manner to a training process of a neural network. For example, a half precision floating point type (FP16) and a single precision floating point type (FP32) are combined to train the neural network. This can accelerate the training process with the FP16 while reducing a precision loss as much as possible.

Although the FP16 can be used to accelerate the training process, the FP16 has a narrow expression range. In the training process, the neural network generates a plurality of gradients distributed in a large range. Especially, as the neural network becomes increasingly complex, more small gradients are generated. Many small gradients exceed a lower limit of the expression range of the FP16 and therefore overflow downward the expression range of the FP 16. As a result, a problem of a large gradient underflow rate occurs, and the large underflow rate affects precision of neural network training. However, if only the FP32 is used for training, because the FP32 has high precision, data is much slower to read and write than that in the FP16, and a compute capability of a chip is affected. In addition, data in an FP32 format needs to occupy large storage space on the chip, which also affects the development of the chip to be miniaturized.

Therefore, based on the compute capability and a storage capability of the chip, training the neural network by using the mixed precision is a good choice. How to reduce the gradient underflow rate of the neural network in a mixed precision training process becomes a major challenge that needs to be overcome in a current mixed precision neural network training process.

## SUMMARY

This application provides a neural network adjustment method, to reduce a gradient underflow rate of a neural network in a training process, and improve neural network training efficiency. This application further provides a corresponding apparatus, a computer-readable storage medium, a computer program product, a chip system, and the like.

A first aspect of this application provides a neural network adjustment method, including: obtaining a first neural network that uses a mixed precision operation, where the first neural network includes a plurality of scale layers, each scale layer has a scaling scale, the scaling scale of each scale layer is a scale used to scale up or down a gradient that is related to each scale layer and that is in a back propagation direction when the first neural network is trained, and the mixed precision operation includes a first precision operation; performing forward propagation processing on a training sample input to the first neural network, to obtain a value of a loss function; performing, in the back propagation direction, a scaling operation on a first gradient of a first operator in a target scale layer based on a scaling scale of the target scale layer, to obtain a second gradient of the first operator, where the target scale layer is any scale layer in the plurality of scale layers, the first gradient of the first operator comes from the value of the loss function, the scaling operation is a scaling-up operation or a scaling-down operation, and the second gradient of the first operator is used to determine a weight gradient of each operator in the target scale layer; and adjusting the scaling scale of the target scale layer based on performance of the weight gradient of each operator in the target scale layer within an expression range of the first precision operation.

The neural network adjustment method provided in this application may be applied to a neural network training process. When neural network models of different targets are trained, the adjustment method in this application may be used to adjust a scaling scale of each layer in the neural network. It should be noted that the solution provided in this application may be stored in a network (which may be a cloud) in a form of a software package/plug-in, and a user can perform a procedure of this application by downloading and installing the software package/plug-in on a computer device during use. The solution provided in this application may also be provided to the user in a form of a cloud service or the like. The user may upload a to-be-trained neural network to the cloud, and the cloud trains the neural network by using the solution provided in this application. Alternatively, the solution in this application may be configured in a chip, and a computer device used for model training may perform the procedure in this application by installing the chip. Alternatively, the solution in this application may be configured in a computer device, and the computer device may perform the procedure in this application when training a neural network. It should be understood that, in addition to the foregoing manners of deploying the technical solutions provided in this application, a specific form of using the technical solutions provided in this application is not limited in this application.

In this application, the mixed precision operation means that two or more operations with different precision are applied in a mixed manner, for example, applied to a training process of the neural network. The first precision operation may be a half precision floating point FP16 operation, and a second precision operation may be a single precision floating point FP32 operation. Certainly, the first precision operation and the second precision operation may also be other types of precision operations. For example, the first precision operation may be a single precision floating point FP32 operation, and the second precision operation may be a double precision floating point FP64 operation, provided that precision of the second precision operation is higher than that of the first precision operation. In other words, an expression range of the second precision operation is greater than an expression range of the first precision operation.

In this application, the first neural network is a neural network on which scale layering is performed, and the first neural network may be obtained by using automatic scale layering or manual scale layering.

In this application, a scale layer may be understood as a layer obtained through scale layering. Each scale layer has a scaling scale, and scaling scales of the scale layers are usually different. Certainly, this is not limited in this application, and scaling scales of different scale layers may also be the same. The scaling scale is a scale used to scale up or down a gradient that is related to each scale layer and that is in a back propagation direction.

In this application, forward propagation and back propagation are involved. Forward propagation is a process of processing a training sample input to the neural network until a value (error loss) of a loss function is obtained. Back propagation (back propagation, BP) means that a parameter in the neural network is updated by using the loss function generated by forward propagation. In this process, a weight gradient of an operator in each layer may be determined by using the value of the loss function, and then the operator weight is updated, so that an error loss is converged. A back propagation algorithm is a back propagation process dominated by a loss value, and aims to obtain an optimal parameter of the neural network, for example, a weight matrix.

In this application, the gradient related to each scale layer includes an input gradient input to the scale layer, a weight gradient used to update a weight, a to-be-output gradient of the scale layer to be output, and the like.

In this application, there may be one or more operators in the target scale layer, and the target scale layer includes at least the first operator If there are a plurality of operators in the target scale layer, the plurality of operators have a logical order. Output of one operator may be used as input of a next operator. The first operator is an operator that is in a first place in the plurality of operators in the logical order. Each operator in the target scale layer includes all operators in the target scale layer.

If there is only one operator in the target scale layer, each operator in the target scale layer is the first operator

In this application, the scaling operation and an inverse scaling operation are two opposite operations. If the scaling operation is a scaling-up operation, the inverse scaling operation is a scaling-down operation. If the scaling operation is a scaling-down operation, the inverse scaling operation is a scaling-up operation.

In this application, the first gradient may be understood as an input gradient, and the second gradient is a gradient obtained through the scaling operation based on the scaling scale of the target scale layer. The weight gradient of each operator in the target scale layer may be determined by using the second gradient.

In this application, a value that is of the first gradient of the first operator and that comes from the loss function may include a value that directly comes from the loss function and a value that indirectly comes from the loss function. If the target scale layer is the first scale layer in the back propagation direction, the first gradient of the first operator in the target scale layer may be obtained through derivation on the value of the loss function. In this case, it may be understood that the first gradient of the first operator in the target scale layer directly comes from the value of the loss function. If the target scale layer is not the first scale layer in the back propagation direction, the first gradient of the first operator in the target scale layer is obtained by using a gradient output by a previous scale layer. By analogy, the gradient output by the previous scale layer is associated with the first gradient of the first operator in the first scale layer in the back propagation direction. In this case, it may be understood that the first gradient of the first operator in the target scale layer indirectly comes from the value of the loss function.

In this application, the using the first precision operation may include performing calculation and/or storage by using a type of first precision. For example, the FP16 operation may be understood as performing calculation and/or storage by using the FP16. The using the second precision operation may include performing calculation and/or storage by using a type of second precision. For example, the FP32 operation may be understood as performing calculation and/or storage by using the FP32.

In this application, the gradient underflow rate is a ratio of a quantity of gradients that exceed an expression range of a precision operation downwards to a total quantity of gradients.

It can be learned from the first aspect that, in a neural network training process, the scaling operation may be performed on the first gradient of the first operator based on the scaling scale of the scale layer, to calculate the weight gradient of each operator in the scale layer, and then a scaling scale of a corresponding scale layer is adjusted by observing performance of the weight gradient of each operator in an expression range of the first precision operation. In this way, the gradient underflow rate of the first precision operation can be effectively reduced by using a small calculation amount, and mixed precision training can be well applied to neural network training. Training efficiency is improved while high training precision is maintained. In addition, data that uses a low precision operation needs to occupy only small storage space and running memory. This is also conducive to fast reading and writing of data that uses the low precision operation by a chip, and reduces computing resources and costs during neural network training.

According to the technical solutions provided in this application, when a neural network is trained, hardware resources of combined low precision and high precision can be used to achieve precision when the neural network is trained only by using a high precision hardware resource, and training efficiency can be maintained high. Alternatively, the training efficiency can be improved by one to three times when the neural network is trained by using hardware resources of same mixed precision. In other words, the neural network is trained by using the technical solution provided in this application, so that a computing resource can be saved or training time can be shortened while training precision is ensured. In particular, a low-level neural network, a heterogeneous neural network, a deep neural network, and the like have a better training effect.

In a possible implementation of the first aspect, the foregoing step: obtaining a first neural network that uses a mixed precision operation includes: receiving an initial neural network to be trained; marking a first type operator in the initial neural network as an operator that uses the first precision operation, to obtain a network that uses the mixed precision operation, where a second type operator in the network that uses the mixed precision operation uses the second precision operation; and performing scale layering on the network that uses the mixed precision operation, to obtain the first neural network.

In this possible implementation, the initial neural network may be a neural network constructed by using a single precision operation, for example, a neural network such as ResNet50 or MobileNet. The initial neural network may be a neural network configured to perform processing such as classification/recognition, compression/decompression, denoising, segmentation, enhancement, conversion, and feature extraction on various types of data such as image/video data, audio data, and text data. This is not limited in this application. The first type operator may be a convolution (convolution, Conv) operator and/or a fully connect (fully connect, FC) operator, and the second type operator may be all or some operators in the initial neural network except the first type operator, for example, a normalization operator. Scale layering means that the initial neural network is layered and the scaling scale of the corresponding layer is configured manually or automatically. It can be learned from this manner that, a neural network of a single precision operation is converted into a neural network of a mixed precision operation, and different scaling scales are allocated to different network layers, so that a gradient underflow rate can be greatly reduced, and a neural network with a large dynamic range of gradient distribution at each network layer can be stably trained.

In a possible implementation of the first aspect, the step of performing scale layering on the network that uses the mixed precision operation includes: obtaining an initial scale of each network layer in the network that uses the mixed precision operation; and combining network layers with a same initial scale, to obtain the first neural network.

In this possible implementation, a layer in a network before scale layering is performed may be referred to as a network layer. Each network layer may have an initial scale, and the initial scale may be obtained through training, or may be obtained through configuration. Network layers of a same initial scale are combined. A combined network may be referred to as a layer-combined network, and the layer-combined network may be used as the first neural network. In this way, the network layers of the same initial scale are combined, so that neural network training efficiency can be further improved.

In a possible implementation of the first aspect, the foregoing step: performing scale layering on the network that uses the mixed precision operation includes: obtaining an initial scale of each network layer in the network that uses the mixed precision operation; combining network layers with a same initial scale to obtain a layer-combined network; and combining a first scaling operation of an output interface of a first network layer and a second scaling operation of an input interface of a second network layer in the layer-combined network to obtain the first neural network, where the first network layer is adjacent to the second network layer, and the first network layer is a previous layer of the second network layer in the back propagation direction.

Compared with the foregoing possible implementation, in this possible implementation, a scaling operation and an inverse scaling operation of two adjacent network layers are further combined on the layer-combined network. For example, if an output interface of a network layer 1 needs to perform a scaling-down operation with a scaling scale of S, and an input interface of a network layer 2 needs to perform a scaling-up operation with a scaling scale of M, the two operations may be combined, and a scaling operation of M/S is performed this manner is equivalent to reducing one scaling operation and one inverse scaling operation to one scaling operation. One scaling operation obtained after the scaling operations are combined may be performed on an output interface of a previous scale layer, or may be performed on an input interface of a next scale layer. In this implementation, the scaling operation and the inverse scaling operation are combined for the two adjacent layers, so that calculation steps are reduced, and neural network training efficiency is further improved.

In a possible implementation of the first aspect, the foregoing step: obtaining an initial scale of each network layer in the network that uses the mixed precision operation includes: determining, based on a preset underflow rate, the initial scale of each network layer in the network that uses the mixed precision operation; or receiving configuration information for configuring the initial scale of each network layer in the network that uses the mixed precision operation, and determining, based on the configuration information, the initial scale of each network layer in the network that uses the mixed precision operation.

In this possible implementation, the initial scale of each network layer may be automatically determined based on the preset underflow rate. This is automatic scale layering. Alternatively, the configuration information that is configured by a user and that is of the initial scale of each network layer may be received, and then the initial scale of each network layer is determined based on the configuration information. This is manual scale layering. It can be learned that, this application provides various scale layering manners, thereby improving flexibility of scale layering.

In a possible implementation of the first aspect, the step of determining, based on a preset underflow rate, the initial scale of each network layer in the network that uses the mixed precision operation includes: inputting different training samples to determine a plurality of groups of scale values of each network layer by using the preset underflow rate as a target, where an average value of the plurality of groups of scale values of each network layer is the initial scale of each network layer.

In this possible implementation, when the initial scale is automatically determined, the preset underflow rate may be used as the target, and the scale values of each of the plurality of groups of network layers are calculated by using different training samples, to calculate an average value and use the average value as the initial scale of each network layer. In this way, accuracy of the initial scale can be improved.

In a possible implementation of the first aspect, the step of: adjusting the scaling scale of the target scale layer based on performance of the weight gradient of each operator in the target scale layer within an expression range of the first precision operation includes: when the weight gradient of each operator in the target scale layer includes an infinite value or an invalid number, scaling down the scaling scale of the target scale layer; or when the weight gradient of each operator in the target scale layer is within the expression range of the first precision operation, scaling up the scaling scale of the target scale layer.

In this possible implementation, when the weight gradient of each operator includes the infinite value or the invalid number, the invalid number may be an invalid number such as a fraction whose denominator is 0. This indicates that the scaling scale of the current target scale layer is excessively large, and the scaling scale of the target scale layer needs to be reduced. When the weight gradient of each operator falls within the expression range of the first precision operation, the scaling scale of the target scale layer may be further attempted to be further expanded by scaling up the scaling scale of the target scale layer. This helps find an optimal scaling scale suitable for each scale layer, thereby improving a convergence speed of the neural network.

In a possible implementation of the first aspect, when the weight gradient of each operator falls within the expression range of the first precision operation, the method further includes: performing an inverse scaling operation of the scaling operation on the weight gradient of each operator in the target scale layer based on the scaling scale of the target scale layer, to obtain a weight gradient of each operator that is obtained through the inverse scaling operation and that is in the target scale layer; and updating a weight of each operator in the target scale layer based on the weight gradient of each operator that is obtained through the inverse scaling operation and that is in the target scale layer.

In this possible implementation, because the weight gradient of each operator in the target scale layer is obtained through calculation by using the second gradient of the first operator that is obtained through the scaling operation, during weight update, the inverse scaling operation needs to be performed on the weight gradient of each operator, and then the weight of each operator is updated. This is more conducive to neural network convergence.

In a possible implementation of the first aspect, the method further includes: determining a to-be-output gradient of the target scale layer based on the second gradient of the first operator; and performing an inverse scaling operation of the scaling operation on the to-be-output gradient of the target scale layer based on the scaling scale of the target scale layer, to obtain an output gradient of the target scale layer.

In this possible implementation, because the to-be-output gradient in the target scale layer is obtained by using the second gradient of the first operator after the scaling operation is performed, an inverse scaling operation of a corresponding scaling scale needs to be performed on the to-be-output gradient, to obtain an appropriate output gradient for calculation of a next scale layer.

In a possible implementation of the first aspect, the method further includes: when the output gradient of the target scale layer is an infinite value or an invalid number, correcting the output gradient of the target scale layer to a valid value within the expression range of the first precision operation; and transmitting the corrected output gradient of the target scale layer to an adjacent scale layer of the target scale layer.

In this possible implementation, if the output gradient of the target scale layer is the infinite value or the invalid number, it indicates that the output gradient is not applicable to weight update of an operator in each scale layer, and a weight update step is directly skipped.

However, to avoid affecting a subsequent calculation process, the output gradient may be corrected to a valid value within the expression range of the first precision operation, and then transmitted to a next scale layer in a back propagation direction for calculation, thereby improving scale update efficiency of the neural network.

In a possible implementation of the first aspect, the method further includes: in the forward propagation process, if an eigenvalue of the target scale layer includes an infinite value or an invalid number, skipping updating the target scale layer.

In this possible implementation, the eigenvalue of the target scale layer is generated at each scale layer in the forward propagation process. In the forward propagation process, whether to update the operator weight in the scale layer may be determined based on performance of the eigenvalue in the expression range of the first precision operation. If a forward feature includes an infinite value or an invalid number, the operator weight does not need to be updated. This helps improve training efficiency of the neural network.

In a possible implementation of the first aspect, the method further includes: when training of the first neural network reaches a preset condition, performing scale layering on the first neural network again to obtain a second neural network.

In this possible implementation, the preset condition may be that a quantity of training times reaches a specific threshold, for example, the quantity of training times reaches 300 cycles, or may be that the neural network has been trained to a specific degree, for example, if a difference between scaling scales of each scale layer is less than a preset value, scale layering may be performed on the first neural network again. For a scale layering manner, refer to the foregoing description, a new second neural network is obtained, and the second neural network is trained. This manner of dynamically updating the scale layer can improve training efficiency of the neural network.

A second aspect of this application provides a neural network adjustment apparatus. The neural network adjustment apparatus has a function of implementing the method in any one of the first aspect or the possible implementations of the first aspect. The function may be implemented by hardware, or may be implemented by hardware executing corresponding software. The hardware or software includes one or more modules corresponding to the foregoing functions, for example, an obtaining unit, a first processing unit, a second processing unit, and a third processing unit. The units may be implemented by using one or more processing units.

A third aspect of this application provides a computer device. The computer device includes at least one processor, a memory, an input/output (input/output, I/O) interface, and computer-executable instructions that are stored in the memory and that can run on the processor. When the computer-executable instructions are executed by the processor, the processor performs the method according to any one of the first aspect or the possible implementations of the first aspect.

A fourth aspect of this application provides a computer-readable storage medium storing one or more computer-executable instructions. When the computer-executable instructions are executed by a processor, one or more processors perform the method according to any one of the first aspect or the possible implementations of the first aspect.

A fifth aspect of this application provides a computer program product storing one or more computer-executable instructions. When the computer-executable instructions are executed by one or more processors, the one or more processors perform the method according to any one of the first aspect or the possible implementations of the first aspect.

A sixth aspect of this application provides a chip system. The chip system includes at least one processor, and the at least one processor is configured to support a neural network adjustment apparatus in implementing the function in any one of the first aspect or the possible implementations of the first aspect. In a possible design, the chip system may further include a memory. The memory is configured to store program instructions and data that are necessary for the neural network adjustment apparatus. The chip system may include a chip, or may include a chip and another discrete component.

**BRIEF DESCRIPTION OF DRAWINGS**

FIG. 1 is a schematic diagram of a structure of a neural network processor according to an embodiment of this application;

FIG. 2 is a schematic diagram of an adjustment architecture of a neural network according to an embodiment of this application;

FIG. 3 is a schematic diagram of a neural network training process according to an embodiment of this application;

FIG. 4 is a schematic diagram of an embodiment of a neural network adjustment method according to an embodiment of this application;

FIG. 5 is a schematic diagram of a structure with an FP16 and an FP32;

FIG. 6 is a schematic diagram of another embodiment of a neural network adjustment method according to an embodiment of this application;

FIG. 7 is a schematic diagram of an embodiment of scale layering according to an embodiment of this application;

FIG. 8 is a schematic diagram of another embodiment of scale layering according to an embodiment of this application;

FIG. 9 is a schematic diagram of still another embodiment of scale layering according to an embodiment of this application;

FIG. 10 is a schematic diagram of still another embodiment of a neural network adjustment method according to an embodiment of this application;

FIG. 11 is a schematic diagram of yet another embodiment of a neural network adjustment method according to an embodiment of this application;

FIG. 12A and FIG. 12B are a schematic diagram of still yet another embodiment of a neural network adjustment method according to an embodiment of this application;

FIG. 13 is a schematic diagram of further another embodiment of a neural network adjustment method according to an embodiment of this application;

FIG. 14 is a schematic diagram of a structure of a neural network adjustment apparatus according to an embodiment of this application; and

FIG. 15 is a schematic diagram of a structure of a computer device according to an embodiment of this application.

## DESCRIPTION OF EMBODIMENTS

The following describes embodiments of this application with reference to the accompanying drawings. It is clear that the described embodiments are merely some rather than all of embodiments of this application. A person of ordinary skill in the art may learn that, with development of technologies and emergence of new scenarios, the technical solutions provided in embodiments of this application are also applicable to similar technical problems.

In the specification, claims, and accompanying drawings of this application, the terms "first", "second", and so on are intended to distinguish between similar objects but do not necessarily indicate a specific order or sequence. It should be understood that the data termed in such a way are interchangeable in proper circumstances so that embodiments of the present invention described herein can be implemented in other orders than the order illustrated or described herein. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

Embodiments of this application provide a neural network adjustment method, to reduce a gradient underflow rate of a neural network in a training process, and improve neural network training efficiency. Embodiments of this application further provide a corresponding apparatus, a computer-readable storage medium, a computer program product, a chip system, and the like. Details are separately described in the following.

Artificial intelligence (artificial intelligence, AI) is a theory, a method, a technology, or an application system that simulates, extends, and expands human intelligence by using a digital computer or a machine controlled by a digital computer, to perceive an environment, obtain knowledge, and achieve an optimal result based on the knowledge. In other words, artificial intelligence is a comprehensive technology in computer science, and aims to understand the essence of intelligence and produce a new intelligent machine that can react in a manner similar to human intelligence. The artificial intelligence is intended to study design principles and implementation methods of various intelligent machines, so that the machines have perception, inference, and decision-making functions.

The artificial intelligence technology is a comprehensive subject, and relates to a wide range of fields, including both hardware and software technologies. Basic technologies of artificial intelligence generally include technologies such as a sensor, a special-purpose artificial intelligence chip, cloud computing, scale-out storage, a big data processing technology, an operation/interaction system, and mechatronics. Software technologies of artificial intelligence mainly include a computer vision technology, a voice processing technology, a natural language processing technology, machine learning/deep learning, and the like.

The artificial intelligence technology is used in smart manufacturing, smart transportation, smart home, smart healthcare, smart security, self-driving, smart city, smart terminals, and the like.

A neural network model is usually obtained by training on a computer device or a platform (for example, a server, a virtual machine (virtual machine, VM), or a container (container)) of a model owner, and the trained model is stored in a form of a model file. When a device (for example, a terminal device, a server, an edge device, a VM, or a container) of a model user needs to use the model, the device of the model user actively loads the model file of the model, or the device of the model owner actively sends the model file of the model to the device of the model user to install the model file, so that the model is applied to the device of the model user to perform a corresponding function.

The server refers to a physical machine.

The terminal device (which may also be referred to as user equipment (user equipment, UE)) is a device having a wireless transceiver function, and may be deployed on land, for example, including an indoor or outdoor device, a handheld device, or a vehicle-mounted device, may be deployed on water (for example, on a ship), or may be deployed in the air (for example, on an airplane, a balloon, and a satellite). The terminal may be a mobile phone (mobile phone), a tablet (pad), a computer having a wireless transceiver function, a virtual reality (virtual reality, VR) terminal, an augmented reality (augmented reality, AR) terminal, a wireless terminal in industrial control (industrial control), a wireless terminal in self-driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), and the like.

The VM or the container may be a virtualized device obtained by dividing a hardware resource of the physical machine in a virtualization manner.

The neural network model is a neural network constructed for one or more service objectives.

In embodiments of this application, the neural network may include a neuron. The neuron may be an operation unit that uses $x_s$ and an intercept of b as an input, where an output of the operation unit may be as follows:

$$ h_{W,b}(x) = f(W^T x) = f\left(\sum_{s=1}^{n} W_s x_s + b\right) $$

s=1, 2, ..., or n, n is a natural number greater than 1, $W_s$ is a weight of $x_s$, and b is a bias of the neural unit. f is an activation function (activation function) of the neuron, and is used to introduce a nonlinear feature into the neural network, to convert the input signal in the neuron into an output signal. The output signal of the activation function may be used as an input of a next neural unit layer. The activation function may be a sigmoid function. The neural network is a network formed by connecting many single neurons together. To be specific, an output of a neuron may be an input of another neuron. An input of each neuron may be connected to a local receptive field of a previous layer to extract a feature of the local receptive field. The local receptive field may be a region including several neurons.

The neural network in embodiments of this application may be a deep neural network (deep neural network, DNN), a convolutional neural network (convolutional neural network, CNN), or another neural network. The following briefly describes the deep neural network and the convolutional neural network.

1. Deep neural network

The deep neural network may be understood as a neural network having a plurality of hidden layers. There is no special measurement standard for "a plurality of" herein, and a multi-layer neural network and the deep neural network that are usually referred to are essentially the same. The DNN is divided based on locations of different layers, and a neural network in the DNN may be divided into three types: an input layer, a hidden layer, and an output layer. Generally, the first layer is the input layer, the last layer is the output layer, and the middle layer is the hidden layer. Layers are fully connected. To be specific, any neuron at an $i^{th}$ layer is necessarily connected to any neuron at an $(i+1)^{th}$ layer. Although the DNN seems complex, it is not complex in terms of work at each layer. Simply speaking, the DNN is the following

linear relationship expression: $\vec{y} = \alpha(W\vec{x} + \vec{b})$, where $\vec{x}$ is an input vector, $\vec{y}$ is an output vector, $\vec{b}$ is an offset vector, $W$ is a weight matrix (also referred to as a coefficient), and $\alpha()$ is an activation function. At each layer, the output vector $\vec{x}$ is obtained through the foregoing operation on the input vector $\vec{y}$. Because the DNN includes a large quantity of layers, there are a large quantity of coefficients $W$ and a large quantity of offset vectors $\vec{b}$.

2. Convolutional neural network

The convolutional neural network is a deep neural network with a convolutional structure. The convolutional neural network includes a feature extractor including a convolutional layer and a sub-sampling layer. The feature extractor may be considered as a filter. A convolution process may be considered as performing convolution by using a trainable filter and an input image or a convolution feature plane (feature map). The convolutional layer is a neuron layer that is in the convolutional neural network and at which convolution processing is performed on an input signal. At the convolutional layer of the convolutional neural network, one neuron may be connected only to some adjacent-layer neurons. One convolutional layer usually includes several feature planes, and each feature plane may include some neurons that are in a rectangular arrangement. Neurons at a same feature plane share a weight, and the weight shared herein is a convolution kernel. Weight sharing may be understood as that an image information extraction manner is irrelevant to a location. A principle implied herein is that statistical information of a part of an image is the same as that of other parts. This means that image information learned in a part can also be used in another part. Therefore, image information obtained through same learning can be used for all locations in the image. At a same convolutional layer, a plurality of convolution kernels may be used to extract different image information. Usually, a larger quantity of convolution kernels indicates richer image information reflected in a convolution operation.

The convolution kernel may be initialized in a form of a matrix of a random size. In a training process of the convolutional neural network, the convolution kernel may obtain a reasonable weight through learning. In addition, benefits directly brought by weight sharing are that connections among layers of the convolutional neural network are reduced, and an overfitting risk is reduced.

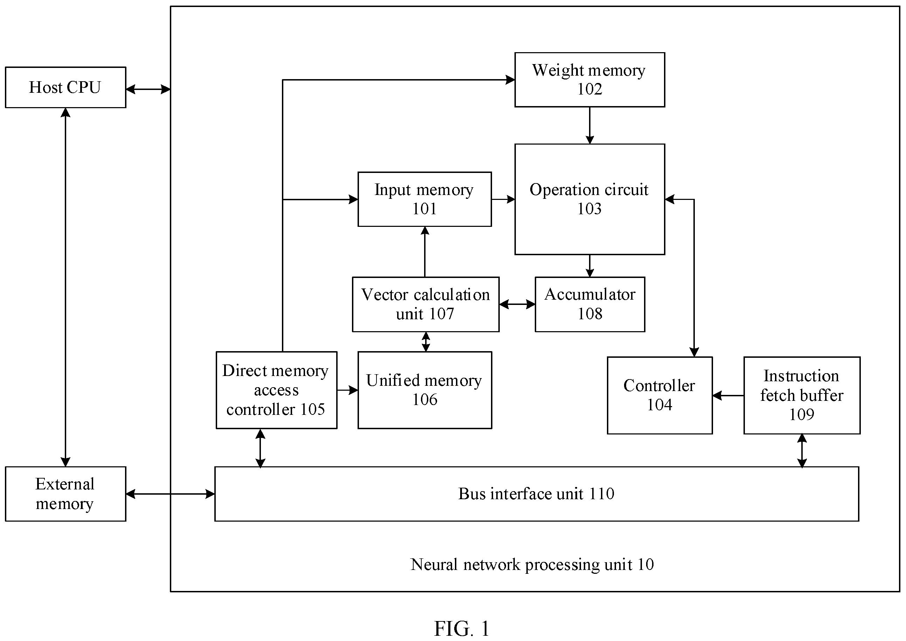

A process of training the neural network may be implemented by using an AI chip, for example, a neural network processor (neural network processor unit, NPU). As shown in FIG. 1, a neural network processor 10 is mounted to a host CPU (host CPU) as a coprocessor, and the host CPU allocates a task. A core part of the neural network processor is an operation circuit 103, and a controller 104 controls the operation circuit 103 to extract matrix data in a memory and perform a multiplication operation.

In some implementations, the operation circuit 103 internally includes a plurality of processing units (Process Engine, PE). In some implementations, the operation circuit 103 is a two-dimensional systolic array. The operation circuit 103 may be alternatively a one-dimensional systolic array or another electronic circuit that can perform mathematical operations such as multiplication and addition. In some implementations, the operation circuit 103 is a general-purpose matrix processor.

For example, it is assumed that there is an input matrix A, a weight matrix B, and an output matrix C. The operation circuit fetches data corresponding to the matrix B from a weight memory 102, and buffers the data on each PE in the operation circuit. The operation circuit obtains data of the matrix A from the input memory 101 to perform a matrix operation on the matrix B, and stores an obtained partial result or an obtained final result of the matrix into an accumulator (accumulator) 108.

A unified memory 106 is configured to store input data and output data. The weight data is directly transferred to the weight memory 102 by using a direct memory access controller (direct memory access controller, DMAC) 105. The input data is also transferred to the unified memory 106 by using the DMAC.

A bus interface unit (bus interface unit, BIU) 110 is used for interaction between an AXI bus and the DMAC and an instruction fetch buffer (Instruction Fetch Buffer) 109.

The bus interface unit 110 is configured for the instruction fetch buffer 109 to obtain instructions from an external memory, and is further configured for the direct memory access controller 101 to obtain original data of the input matrix A or the weight matrix B from the external memory.

The DMAC is mainly configured to transfer input data in the external memory DDR to the unified memory 106, transfer weight data to the weight memory 102, or transfer input data to the input memory 101.

A vector calculation unit 107 includes a plurality of operation processing units, and if necessary, performs further processing such as vector multiplication, vector addition, an exponential operation, a logarithmic operation, or value comparison on outputs of the operation circuit. The vector calculation unit 107 is mainly used for neural network non-convolution/FC layer network calculation, such as pooling (pooling), batch normalization (batch normalization), and local response normalization (local response normalization).

In some implementations, the vector calculation unit 107 can store a processed output vector into a unified buffer 106. For example, the vector calculation unit 107 may apply a non-linear function to the output, for example, a vector of an accumulated value, of the operation circuit 103 to generate an activation value. In some implementations, the vector calculation unit 107 generates a normalized value, a combined value, or both. In some implementations, the processed output vector can be used as an activation input of the operation circuit 103, for example, used at a subsequent layer in the neural network.

The instruction fetch buffer (instruction fetch buffer) 109 connected to the controller 104 is configured to store instructions used by the controller 104.

The unified memory 106, the input memory 101, the weight memory 102, and the instruction fetch buffer 109 are all on-chip memories. The external memory is private to a hardware architecture of the neural network processor.

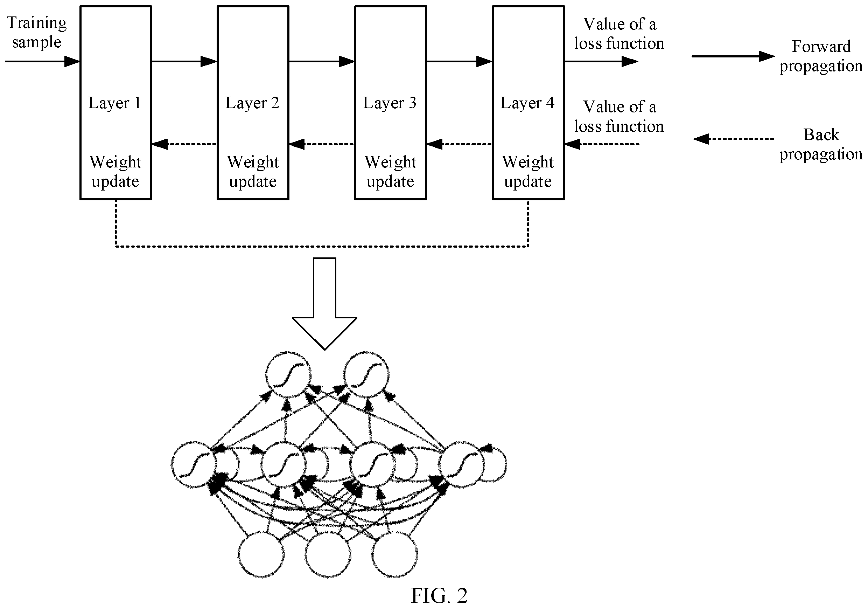

The foregoing describes the neural network, the deep neural network, the convolutional neural network, and the AI chip that may be used for neural network training. The following describes, with reference to FIG. 2, a forward propagation process and a back propagation process that are in a neural network training process.

A neural network shown in FIG. 2 includes four layers (the neural network in FIG. 2 is merely used as an example herein, and actually the neural network may include a plurality of layers), which are respectively a layer 1, a layer 2, a layer 3, and a layer 4. For a structure of each layer in the neural network and a relationship between layers, refer to content in the following example in FIG. 2 for understanding. Certainly, content in the following example in FIG. 2 is merely an example, and is not limited to such an inter-layer relationship.

The forward propagation process refers to layer-by-layer processing on a training sample input to the neural network, for example, the training sample is processed first on the layer 1, and then on the layer 2 and the layer 3, until a value of a loss function is output on the layer 4. The value of the loss function may also be referred to as an error loss.

Back propagation (back propagation, BP) means updating a parameter in the neural network by using the value of the loss function generated by forward propagation. In this process, a weight gradient of an operator in each layer may be determined by using the value of the loss function, and then the operator weight is updated, so that an error loss is converged. In FIG. 2, back propagation is a process from the layer 4 to the layer 3, then to the layer 2, and finally to the layer 1. A back propagation algorithm is a back propagation process dominated by the loss function, and aims to obtain an optimal parameter of the neural network, for example, a weight matrix.

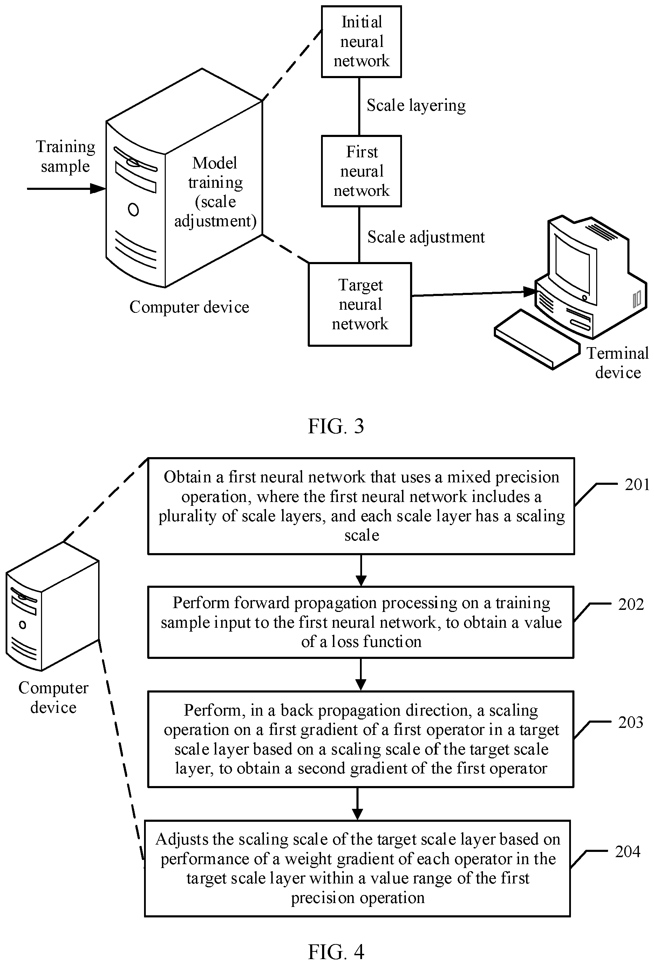

The neural network adjustment method provided in embodiments of this application may be applied to a neural network training process shown in FIG. 3. As shown in FIG. 3, a computer device may train an initial neural network by using a training sample, and may obtain a target neural network through a plurality of rounds of training. The target neural network obtained through training may be used in a corresponding terminal device for service application. In the process of training the initial neural network, a first neural network may be obtained by using scale layering, and then scale adjustment is performed on a scaling scale of a scale layer in the first neural network.

It should be noted that the solution provided in this application may be stored in a network (which may be a cloud) in a form of a software package/plug-in, and a user can perform a procedure of this application by downloading and installing the software package/plug-in on a computer device during use. The solution provided in this application may also be provided to the user in a form of a cloud service or the like. The user may upload a to-be-trained neural network to the cloud, and the cloud trains the neural network by using the solution provided in this application. Alternatively, the solution in this application may be configured in a chip, and a computer device used for model training may perform the procedure in this application by installing the chip. Alternatively, the solution in this application may be configured in a computer device, and the computer device may perform the procedure in this application when training a neural network. It should be understood that, in addition to the foregoing manners of deploying the technical solutions provided in this application, a specific form of using the technical solutions provided in this application is not limited in this application.

Refer to FIG. 4. The following describes a neural network adjustment method provided in an embodiment of this application.

As shown in FIG. 4, an embodiment of a neural network adjustment method provided in an embodiment of this application includes the following steps.

201: A computer device obtains a first neural network that uses a mixed precision operation, where the first neural network includes a plurality of scale layers, and each scale layer has a scaling scale.

The scaling scale of each scale layer is a scale used to scale up or down a gradient that is related to each scale layer and that is in a back propagation direction when the first neural network is trained.

The mixed precision operation means that two or more operations with different precision are applied in a mixed manner, for example, applied to a training process of the neural network. The mixed precision operation includes a first precision operation and a second precision operation, and an expression range of the second precision operation is greater than an expression range of the first precision operation.

The first precision operation may be a half precision floating point FP16 operation, and the second precision operation may be a single precision floating point FP32 operation. Certainly, the first precision operation and the second precision operation may also be other types of precision operations. For example, the first precision operation may be a single precision floating point FP32 operation, and the second precision operation may be a double precision floating point FP64 operation, provided that precision of the second precision operation is higher than that of the first precision operation. In other words, the expression range of the second precision operation is greater than the expression range of the first precision operation. It should be understood that the first precision may alternatively be precision lower than that of the FP16, for example, FP8 or INT8.

Using the first precision operation may include performing calculation and/or storage by using a type of first precision. For example, the FP16 operation may be understood as performing calculation and/or storage by using the FP16. Using the second precision operation may include performing calculation and/or storage by using a type of second precision. For example, the FP32 operation may be understood as performing calculation and/or storage by using the FP32.

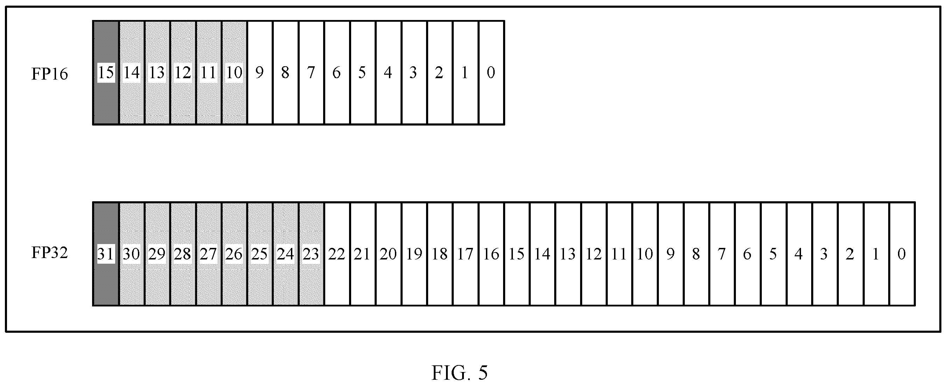

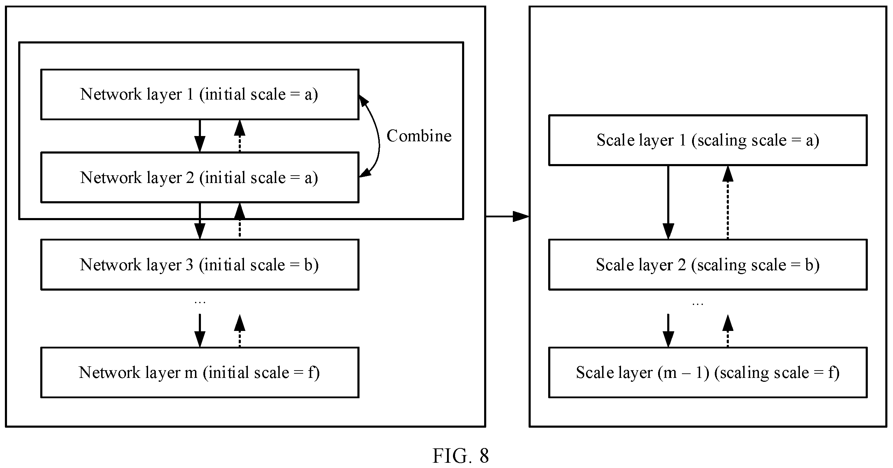

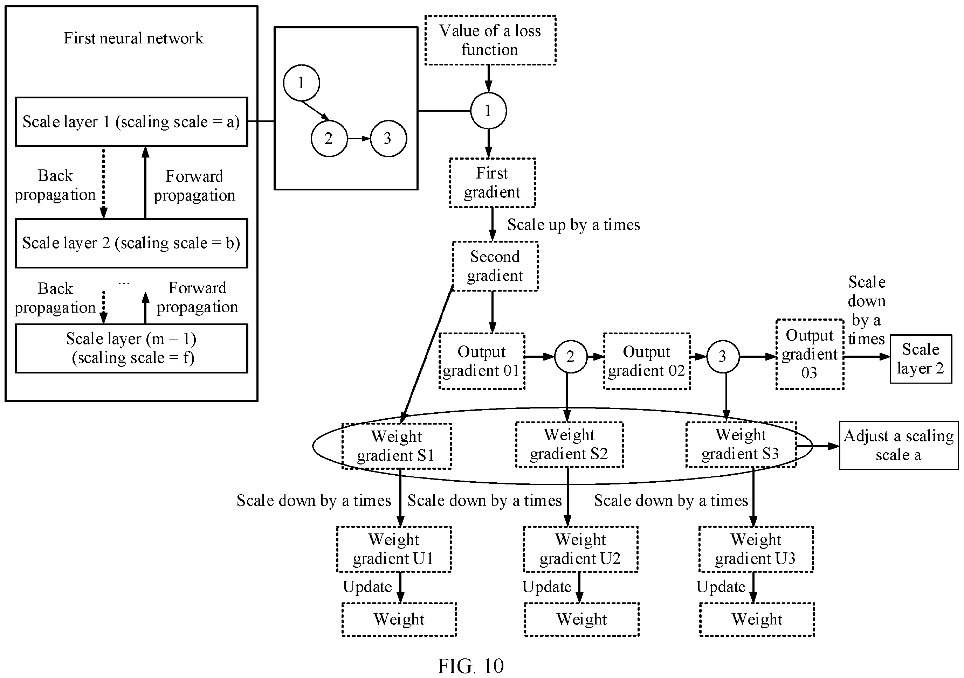

For the FP16 and the FP32, refer to FIG. 5 for understanding. As shown in FIG. 5, the FP16 is a half precision floating point number, and 1 bit represents a symbol, for example, a bit 15 corresponding to the FP16 in FIG. 5; 5 bits represent an index, for example, bits 10 to 14 corresponding to the FP16 in FIG. 5; and 10 bits represent a decimal, for example, bits 0 to 9 corresponding to the FP16 in FIG. 5. The FP32 is a single precision floating point number, and 1 bit represents a symbol, for example, a bit 31 corresponding to the FP32 in FIG. 5; 8 bits represent an index, for example, bits 23 to 30 corresponding to the FP32 in FIG. 5; and 23 bits represent a decimal, for example, bits 0 to 22 corresponding to the FP32 in FIG. 5. A data range of the FP16 is ($6 \times 10^{-8}$ to 65504), and a data range of the FP32 is ($1.4 \times 10^{-45}$ to $1.7 \times 10^{38}$). The data ranges of the FP32 and the FP16 are different. In big data computing, the FP16 has overflow risks.

A gradient underflow rate is a ratio of a quantity of gradients that exceed an expression range of a precision operation downwards to a total quantity of gradients.

The first neural network is a neural network on which scale layering is performed, and the first neural network may be obtained through automatic scale layering or manual scale layering.

A scale layer may be understood as a layer obtained through scale layering. Each scale layer has a scaling scale, and scaling scales of the scale layers are usually different. Certainly, this is not limited in this application, and scaling scales of different scale layers may also be the same. The scaling scale is a scale used to scale up or down a gradient that is related to each scale layer and that is in a back propagation direction.

The gradient related to each scale layer includes an input gradient input to the scale layer, a weight gradient used to update a weight, a to-be-output gradient of the scale layer to be output, and the like.

202: The computer device performs forward propagation processing on a training sample input to the first neural network, to obtain a value of a loss function. An applicable loss function may be selected based on a specific task executed by the first neural network. For example, the loss function used by the first neural network may include but is not limited to the following types: 0-1 loss, a hinge loss (hinge loss), a softmax loss, a logistic loss (Logistic-loss), a cross entropy (cross entropy), a softmax cross entropy (softmax cross entropy), a triplet loss (triplet loss), a mean square error (mean squared error, MSE), a mean absolute error (mean absolute error, MAE), a smooth L1 loss, an L1 loss, an L2 loss, a center loss (center loss), and the like.

203: The computer device performs, in the back propagation direction, a scaling operation on a first gradient of a first operator in a target scale layer based on a scaling scale of the target scale layer, to obtain a second gradient of the first operator

The target scale layer is any scale layer in the plurality of scale layers, the first gradient of the first operator comes from the value of the loss function, the scaling operation is a scaling-up operation or a scaling-down operation, and the second gradient of the first operator is used to determine a weight gradient of each operator in the target scale layer.

There may be one or more operators in the target scale layer. If there are a plurality of operators, the plurality of operators have a logical order. Output of one operator may be used as input of a next operator. The first operator is an operator that is in a first place in the plurality of operators in the logical order.

The first gradient may be understood as an input gradient, and the second gradient is a gradient obtained through the scaling operation based on the scaling scale of the target scale layer. The weight gradient of each operator in the target scale layer may be determined by using the second gradient.

A value that is of the first gradient of the first operator and that comes from the loss function may include a value that directly comes from the loss function and a value that indirectly comes from the loss function. If the target scale layer is the first scale layer in the back propagation direction, the first gradient of the first operator in the target scale layer may be obtained through derivation on the value of the loss function. In this case, it may be understood that the first gradient of the first operator in the target scale layer directly comes from the value of the loss function. If the target scale layer is not the first scale layer in the back propagation direction, the first gradient of the first operator in the target scale layer is obtained by using a gradient output by a previous scale layer. By analogy, the gradient output by the previous scale layer is associated with the first gradient of the first operator in the first scale layer in the back propagation direction. In this case, it may be understood that the first gradient of the first operator in the target scale layer indirectly comes from the value of the loss function.

204: The computer device adjusts the scaling scale of the target scale layer based on performance of the weight gradient of each operator in the target scale layer within an expression range of the first precision operation.

In this embodiment of this application, in a neural network training process, the scaling operation may be performed on the first gradient of the first operator based on the scaling scale of the scale layer, to calculate the weight gradient of each operator in the scale layer, and then a scaling scale of a corresponding scale layer is adjusted by observing performance of the weight gradient of each operator in an expression range of the first precision operation. In this way, the gradient underflow rate of the first precision operation can be effectively reduced by using a small calculation amount, and mixed precision training can be well applied to neural network training. Training efficiency is improved while high training precision is maintained. In addition, data that uses a low precision operation needs to occupy only small storage space on a chip. This is also conducive to fast reading and writing of data that uses the low precision operation by the chip.

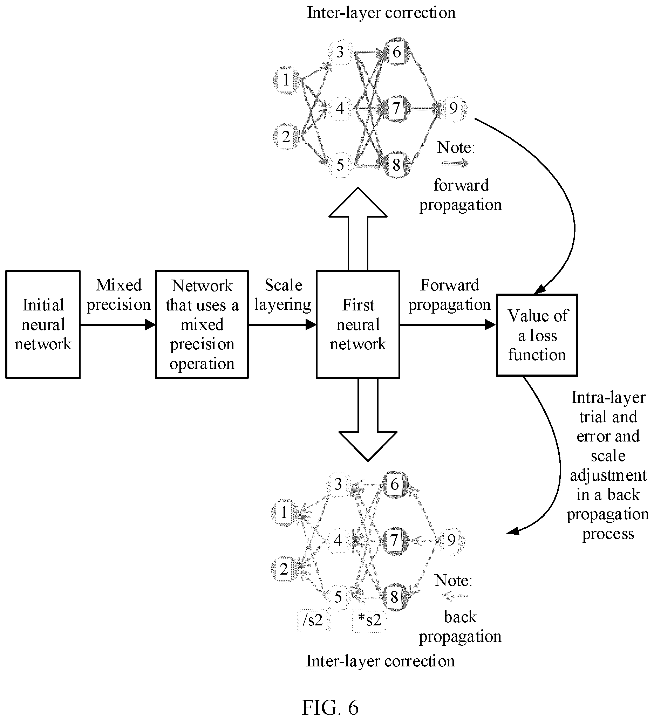

For an adjustment solution of the neural network provided in embodiments of this application, refer to FIG. 6 for understanding. As shown in FIG. 6, the solution includes: performing mixed precision conversion on an initial neural network model, to obtain a network that uses a mixed precision operation, and then performing scale layering on the network that uses the mixed precision operation, to obtain a first neural network. Forward propagation is performed on the basis of the first neural network to obtain a value of a loss function. Back propagation is performed based on the value of the loss function, and intra-layer trial and error in a scale layer and scaling scale adjustment are performed in a back propagation process. In addition, the scale layer may be corrected in both the forward propagation process and the back propagation process.

In other words, the foregoing neural network adjustment method may include the following several parts: 1: Perform scale layering on the initial neural network to obtain the first neural network. 2: Adjust the scaling scale of the scale layer through intra-layer trial and error; 3: Optimize an adjustment process through inter-layer correction.

1: Perform scale layering on the initial neural network to obtain the first neural network.

In this embodiment of this application, after receiving the to-be-trained initial neural network, a computer device may mark a first type operator in the initial neural network as an operator that uses the first precision operation, where a second type operator in the initial neural network uses the second precision operation by default, to obtain the network that uses the mixed precision operation; and then perform scale layering on the network that uses the mixed precision operation, to obtain the first neural network.

In this embodiment of this application, the initial neural network may be a neural network constructed by using a single precision operation, for example, a neural network such as ResNet50 or MobileNet. The first type operator may be a convolution (convolution, Conv) operator and/or a fully connect (fully connect, FC) operator, and the second type operator may be all or some operators in the initial neural network except the first type operator, for example, a normalization operator

A scale layering solution may include automatic scale layering and manual scale layering, which are separately described below.

1. Automatic scale layering.

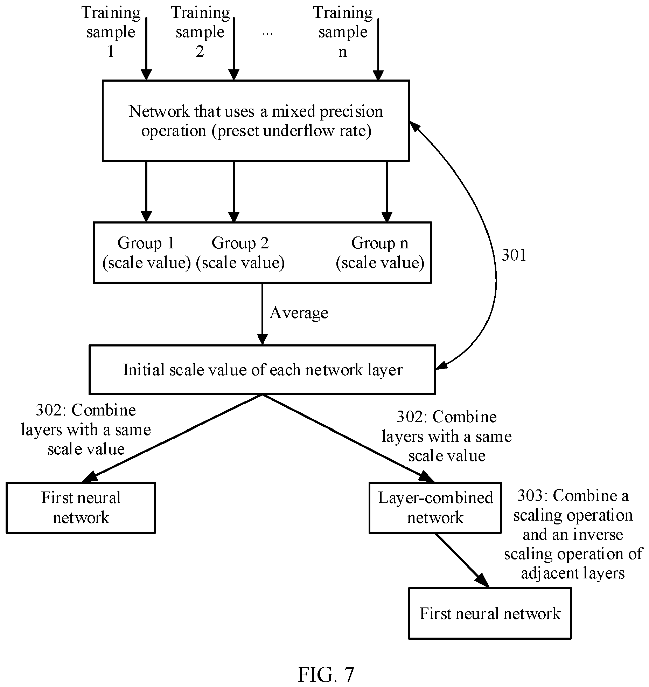

For a process of automatic scale layering, refer to FIG. 7 for understanding.

301: Input different training samples to determine a plurality of groups of scale values of each network layer by using the preset underflow rate as a target, where an average value of the plurality of groups of scale values of each network layer is the initial scale of each network layer

Certainly, step 301 is merely a manner of calculating the initial scale of the network layer, and the initial scale of the network layer may also be determined in another manner.

It should be noted that the training sample in this embodiment of this application is a sample of one batch, not a training sample. For example, a training sample 1, a training sample 2, ..., and a training sample n in FIG. 7 are samples of different batches.

Each time a training sample is input, a group of scale values is obtained by using a preset underflow rate as a target. The group of scale values includes one scale value of each network layer. For example, if the training sample 1 is input, a group 1 is obtained. If a network that uses a mixed precision operation includes m network layers, the group 1 includes a scale value 11 of a network layer 1, a scale value 21 of a network layer 2, ..., and a scale value ml of a network layer m. In this way, if the training sample 2 is input, a group 2 is obtained, and the group 2 includes a scale value 12 of the network layer 1, a scale value 22 of the network layer 2, ..., and a scale value m2 of the network layer m. By analogy, if the training sample n is input, a group n is obtained, and the group n includes a scale value 1n of the network layer 1, a scale value 2n of the network layer 2, ..., and a scale value mn of the network layer m. For an initial scale of each network layer, only n scale values of the network layer need to be added and then averaged. For example, an initial scale of the network layer 1 = (a scale value 11 + a scale value 12, .. , + a scale value 1n)/n; an initial scale of the network layer 2 = (a scale value 21 + a scale value 22, .. , + a scale value 2n)/n; ...; and an initial scale of the network layer m = (a scale value ml + a scale value m2, ..., + a scale value mn)/n.

302: Combine network layers with a same initial scale to obtain a layer-combined network.

In this embodiment of this application, the layer-combined network may be directly used as the first neural network, or step 303 may be performed based on the layer-combined network.

For a layer combination process, refer to FIG.

8. As shown in FIG. 8, the network that uses a mixed precision operation includes m network layers, which are respectively a network layer 1, a network layer 2, a network layer 3, ..., and a network layer m. An initial scale of the network layer 1 is a, an initial scale of the network layer 2 is a, an initial scale of the network layer 3 is b, ..., and an initial scale of the network layer m is f. Because initial scales of the network layer 1 and the network layer 2 are both a, the network layer 1 and the network layer 2 may be combined. In this example, only the network layer 1 and the network layer 2 have a same initial scale, and initial scales of other network layers are different. In this case, only the network layer 1 and the network layer 2 are combined. If there are other network layers that have a same initial scale, the network layers may be combined by referring to the solution for combining the network layer 1 and the network layer 2. The combined network is referred to as a layer-combined network. The layer-combined network layer may be directly used as the first neural network, to obtain a first neural network that includes (m - 1) scale layers and that is on the right side of FIG. 8. In the (m - 1) scale layers, a scaling scale of a scale layer 1 = a, a scaling scale of ta e scale layer 2 = b, ..., and a scaling scale of a scale layer (m - 1) = f. In the first neural network on the right side of FIG. 8, a dashed arrow represents back propagation, and a solid arrow represents forward propagation.

303: Combine a first scaling operation of an output interface of a first network layer and a second scaling operation of an input interface of a second network layer in the layer-combined network to obtain the first neural network, where the first network layer is adjacent to the second network layer, and the first network layer is a previous layer of the second network layer in the back propagation direction.

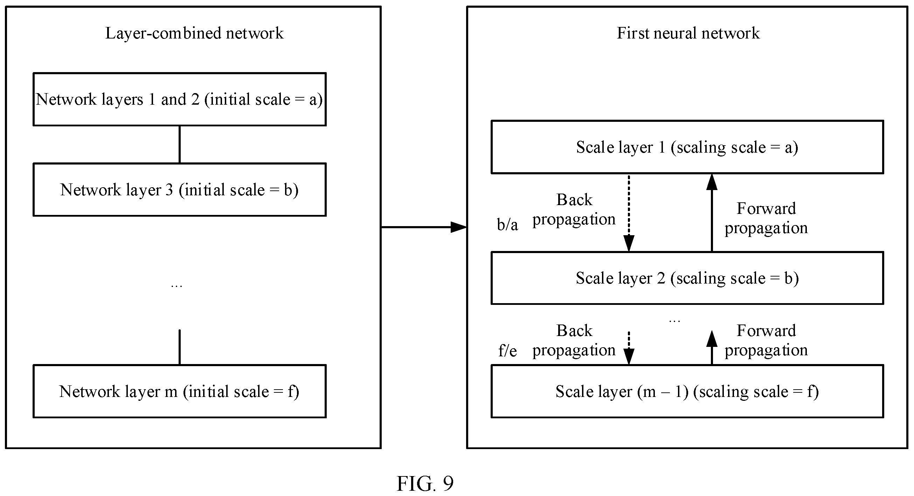

In this embodiment of this application, for a process from the layer-combined network to the first neural network, refer to FIG. 9. As shown in FIG. 9, the layer-combined network on the left side of FIG. 9 may be obtained based on a combining process on the left side of FIG. 8. In the layer-combined network, an initial scale of each of network layers 1 and 2 = a, and an initial scale of a network layer 3 = b. If an a-time scaling-up operation is performed on an input interface of the network layer 1-2, a first scaling operation is a scaling-down operation of a times. If a scaling-up operation of b times is performed on an input interface of a network layer 3, a second scaling operation is a scaling-up operation of b times. The scaling-down operation of a times of the network layer 1-2 and the scaling-up operation of b times of the network layer 3 may be combined, and the two operations are combined, which is equivalent to performing a scaling-up operation of b/a times once. In this way, the first neural network on the right side of FIG. 9 may be obtained. In the first neural network, a scaling scale of the scale layer 1 = a, and a scaling scale of the scale layer 2 = b. However, only one scaling operation of b/a needs to be performed on the output interface of the scale layer 1 or the input interface of the scale layer 2. By analogy, a scaling scale of the scale layer (m - 1) is still f, but only one scaling operation of f/e needs to be performed on an output interface of the scale layer (m - 2) or an input interface of the scale layer (m - 1), and e is an initial scale of a previous layer of the network layer m. In the first neural network on the right side of FIG. 9, a dashed arrow represents back propagation, and a solid arrow represents forward propagation.

It can be learned from the example that when the scaling operation is used to combine networks as the first neural network, one scaling operation and one inverse scaling operation of a target scale layer are reduced to one scaling operation, thereby reducing calculation steps and further improving neural network training efficiency.

It should be noted that one scaling operation obtained after the scaling operations are combined may be performed on an output interface of a previous scale layer, or may be performed on an input interface of a next scale layer.

2: Manual scale layering.

Obtaining an initial scale of the network layer by using automatic scale layering is: determining, based on a preset underflow rate, the initial scale of each network layer in the network that uses the mixed precision operation. Manual scale layering is: receiving configuration information for configuring the initial scale of each network layer in the network that uses the mixed precision operation, and determining, based on the configuration information, the initial scale of each network layer in the network that uses the mixed precision operation. Layer combining and scaling operation combining of other network layers are the same as those described in the automatic scale layering part. For understanding, refer to content in automatic scale layering part. Details are not described herein again.

In this embodiment of this application, a neural network of a single precision operation is converted into a neural network of a mixed precision operation, and different scaling scales are allocated to different network layers, so that a gradient underflow rate can be greatly reduced, and a neural network with a large dynamic range of gradient distribution at each network layer can be stably trained.

2: Adjust the scaling scale of the scale layer through intralayer trial and error.

In the back propagation direction, a process of performing scale adjustment by using the first neural network obtained in step 302 or step 303 is slightly different, and is separately described below.

1. The layer-combined network in step 302 is used as the first neural network.

As shown in FIG. 10, in the first neural network, scale layers in the back propagation direction are respectively a scale layer 1, a scale layer 2, ..., and a scale layer (m - 1).

The scale layer 1 includes three operators: an operator 1, an operator 2, and an operator 3. Logical relationships between the three operators are shown in FIG. 10. Output of the operator 1 is input of the operator 2, and output of the operator 2 is input of the operator 3. The operator 1 is a first operator of the scale layer 1. When the target scale layer is the scale layer 1, a first gradient of the operator 1 may be obtained through derivation on a value of a loss function, and then a scaling operation is performed on the first gradient based on a scaling scale a of the scale layer 1. In this embodiment of this application, an example in which the scaling operation is a scaling-up operation is used, and the scaling-up operation is performed on the first gradient by a times, to obtain a second gradient of the operator 1. Then, a weight gradient S1 of the operator 1 and an output gradient 01 of the operator 1 are calculated by using the second gradient, the output gradient 01 of the operator 1 is output to the operator 2, a weight gradient S2 of the operator 2 is calculated by using the output gradient 01, an output gradient 02 of the operator 2 is further calculated, the output gradient 02 of the operator 2 is output to the operator 3, and a weight gradient S3 of the operator 3 and an output gradient 03 of the operator 3 are calculated by using the output gradient 02 of the operator 2.

When the weight gradient of each operator in the target scale layer includes an infinite value (infinite, INF) or an invalid number (not a number, NAN), the scaling scale of the target scale layer is scaled down. For example, the scaling scale is scaled down by $1/\sqrt{2}$ on the basis of the scaling scale a, and an adjusted scaling scale is $b \times 1/\sqrt{2}$. When the weight gradient of each operator falls within the expression range of the first precision operation, the scaling scale of the target scale layer is scaled up. For example, the scaling scale is scaled up by $2^{(1/1000)}$ based on the scaling scale a, and an adjusted scaling scale is $b \times 2^{(1/1000)}$.

It should be noted that, the obtaining the adjusted scaling scale by using $b \times 1/\sqrt{2}$ and $b \times 2^{(1/1000)}$ listed herein is only one manner, and the scaling scale may be scaled down or scaled up in another manner, for example, a value is subtracted from a current scaling scale, or a value is added to a current scaling scale. Certainly, this may be obtained in another manner, and the manner is applicable to scaling scale adjustment in this application provided that scaling scale can be scaled down or scaled up.

In this embodiment of this application, when the weight gradient of each operator includes the infinite value or the invalid number, the invalid number may be an invalid number such as a fraction whose denominator is 0. This indicates that the scaling scale of the current target scale layer is excessively large, and the scaling scale of the target scale layer needs to be reduced. When the weight gradient of each operator falls within the expression range of the first precision operation, the scaling scale of the target scale layer may be further attempted to be further expanded by scaling up the scaling scale of the target scale layer. This helps find an optimal scaling scale suitable for each scale layer, thereby improving a convergence speed of the neural network.

When the weight gradient of each operator in the target scale layer falls within the expression range of the first precision operation, an inverse scaling operation of the scaling operation is performed on the weight gradient of each operator in the target scale layer based on the scaling scale of the target scale layer, to obtain a weight gradient of each operator that is obtained through the inverse scaling operation and that is in the target scale layer. A weight of each operator in the target scale layer is updated based on the weight gradient of each operator that is obtained through the inverse scaling operation and that is in the target scale layer

With reference to FIG. 10, at the scale layer 1, when the weight gradient S1 of the operator 1, the weight gradient S2 of the operator 2, and the weight gradient S3 of the operator 3 are all within the expression range of the first precision operation, an inverse scaling operation is performed on the weight gradient S1, the weight gradient S2, and the weight gradient S3 based on the scaling scale a of the scale layer 1, that is, an operation of scaling down a times is performed. A weight gradient U1, a weight gradient U2, and a weight gradient U3 that are obtained after the scaling operation are respectively obtained. Further, the weight of the operator 1 may be updated based on the weight gradient U1, the weight of the operator 2 may be updated based on the weight gradient U2, and the weight of the operator 3 may be updated based on the weight gradient U3

In addition, in this embodiment of this application, a to-be-output gradient of the target scale layer may further be determined based on the second gradient of the first operator. An inverse scaling operation of the scaling operation is performed on the to-be-output gradient of the target scale layer based on the scaling scale of the target scale layer, to obtain an output gradient of the target scale layer. With reference to FIG. 10, the output gradient 03 of the operator 3 may be used as a to-be-output gradient, and then the output gradient 03 is scaled down by a times to obtain an output gradient to be output to the scale layer 2, and the output gradient is transmitted to the scale layer 2.

An execution process of the solution in this embodiment of this application at the scale layer 2 is basically the same as that at the scale layer 1. A difference lies in that the first gradient of the first operator in the scale layer 2 is a received output gradient output by the scale layer 1, and the first gradient is not directly calculated by using the value of the loss function in the operator 1.

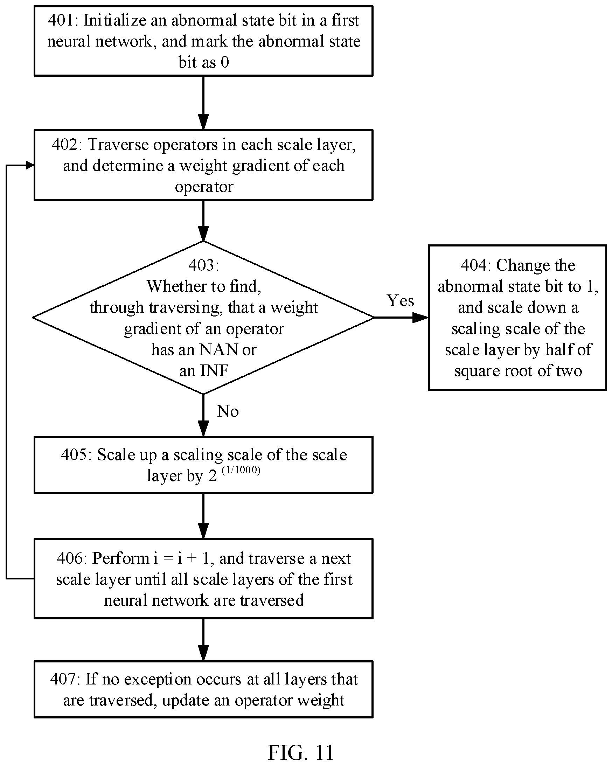

In this embodiment of this application, for a process of adjusting the scaling scale at the scale layer, refer to FIG. 11 for understanding.

As shown in FIG. 11, the process includes the following steps.

401: Initialize an abnormal state bit in a first neural network, and mark the abnormal state bit as 0.

402: Traverse operators in each scale layer, and determine a weight gradient of each operator

For example, operators in an $i^{th}$ layer are traversed, and a weight gradient of each operator is determined. Initial i = 1, and i represents a number of a layer on which scale layering is performed. If the scale layer is numbered from 0, initial i = 0.

For a process of determining the weight gradient of each operator, refer to the foregoing description in FIG. 10 for understanding.

403: Whether to find, through traversing, that a weight gradient of an operator has an NAN or an INF.

404: When it is found, through traversing, that the weight gradient of the operator has the NAN or the INF, change the abnormal state bit to 1, and scale down the scaling scale of the scale layer by $1/\sqrt{2}$ .

405: When the weight gradients of all the operators in the scale layer are traversed, and no NAN or INF appears, scale up the scaling scale of the scale layer by $2^{(1/1000)}$.

406: Perform i = i + 1, traverse a next scale layer, and then repeat the foregoing process 402 to 406 until all scale layers of the first neural network are traversed.

407: If no exception occurs at all layers that are traversed, update an operator weight.

2: Combine the networks as the first neural network by using the scaling operation in step 303.

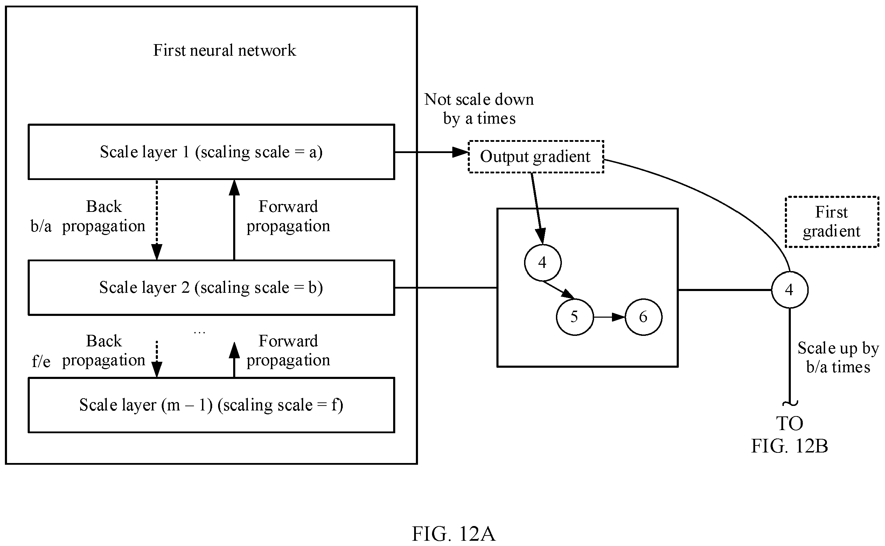

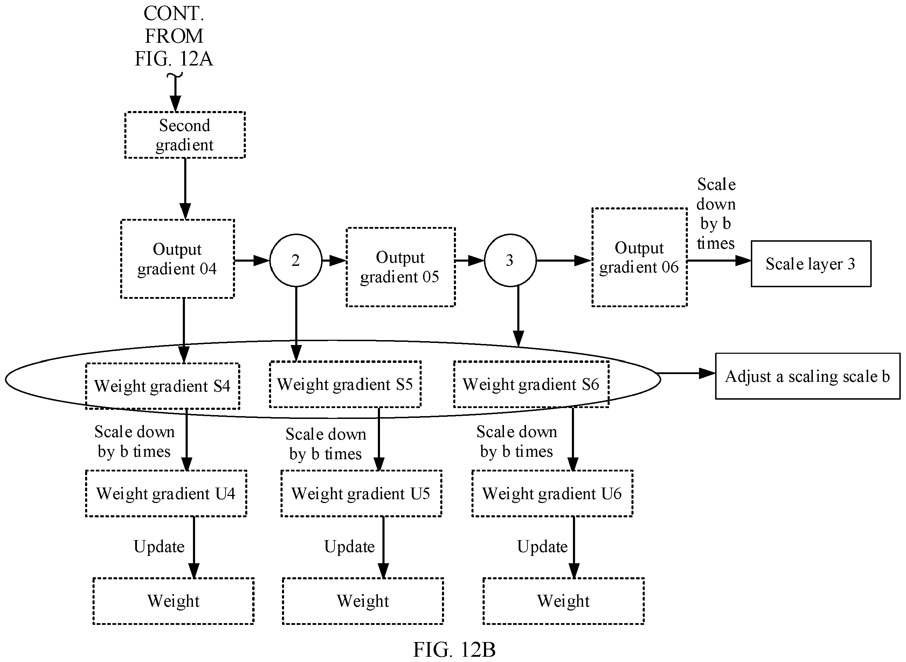

As shown in FIG. 12A and FIG. 12B, in the first neural network, scale layers in the back propagation direction are respectively a scale layer 1, a scale layer 2, ..., and a scale layer (m - 1). A scaling scale of the scale layer 1 is a, a scaling scale of the scale layer 2 is b, ..., and a scaling scale of the scale layer (m - 1) is f. However, only one scaling operation of b/a needs to be performed on an output interface of the scale layer 1 or an input interface of the scale layer 2. By analogy, but only one scaling operation of f/e needs to be performed on an output interface of the scale layer (m - 2) or an input interface of the scale layer (m - 1). In this embodiment of this application, an example in which a b/a scaling operation is performed once on the input interface of the scale layer 2 is used for description.

For the solution of this application, for an execution process at the scale layer 1, refer to the content in FIG. 10 for understanding. A difference is that processing of scaling down by a times is not performed on the to-be-output gradient, but an output gradient output by the scale layer 1 is directly scaled up by b/a times at the input interface of the scale layer 2, instead of being further scaled up by b times at the scale layer 2 in FIG. 10.

An execution process at the scale layer 2 is shown in FIG. 12A and FIG. 12B. The scale layer 2 includes three operators: an operator 4, an operator 5, and an operator 6. A logical relationship between the three operators is shown in FIG. 12A and FIG. 12B. Output of the operator 4 is input of the operator 5, and output of the operator 5 is input of the operator 6. The operator 4 is a first operator of the scale layer 4. When the target scale layer is the scale layer 2, the output gradient of the scale layer 1 is the first gradient of the operator 4, and then a scaling operation is performed on the first gradient of the operator 4 based on the scaling scale b/a of the scale layer 2. In this embodiment of this application, an example in which the scaling operation is a scaling-up operation is used, and the scaling-up operation is performed on the first gradient by b/a times, to obtain a second gradient of the operator 4. Then, a weight gradient S4 of the operator 4 and an output gradient 04 of the operator 4 are calculated by using the second gradient, the output gradient 04 of the operator 4 is output to the operator 5, a weight gradient S5 of the operator 5 is calculated by using the output gradient 04, an output gradient 05 of the operator 5 is further calculated, the output gradient 05 of the operator 5 is output to the operator 6, and a weight gradient S6 of the operator 6 and an output gradient 06 of the operator 6 are calculated by using the output gradient 05 of the operator 5.

When the weight gradient of each operator in the scale layer 2 includes an INF or an NAN, the scaling scale of the target scale layer is scaled down. For example, the scaling scale is scaled down by $1/\sqrt{2}$ on the basis of the scaling scale n, and an adjusted scaling scale is $b \times 1/\sqrt{2}$. When the weight gradient of each operator falls within the expression range of the first precision operation, the scaling scale of the target scale layer is scaled up. For example, the scaling scale is scaled up by $2^{(1/1000)}$ based on the scaling scale b, and an adjusted scaling scale is $b \times 2^{(1/1000)}$.

When the weight gradient of each operator falls within the expression range of the first precision operation, an inverse scaling operation of the scaling operation is performed on the weight gradient of each operator based on the scaling scale of the target scale layer, to obtain a weight gradient of each operator that is obtained through the inverse scaling operation. A weight of each operator is updated based on the weight gradient of each operator obtained through the inverse scaling operation.

With reference to FIG. 12A and FIG. 12B, when the weight gradient S4 of the operator 4, the weight gradient S5 of the operator 5, and the weight gradient S6 of the operator 6 are all within the expression range of the first precision operation, an inverse scaling operation is performed on the weight gradient S4, the weight gradient S5, and the weight gradient S6 based on the scaling scale b of the scale layer 2, that is, an operation of scaling down b times is performed. A weight gradient U4, a weight gradient U5, and a weight gradient U6 that are obtained after the scaling operation are respectively obtained. Further, the weight of the operator 4 may be updated based on the weight gradient U4, the weight of the operator 5 may be updated based on the weight gradient U5, and the weight of the operator 6 may be updated based on the weight gradient U6.

In FIG. 12A and FIG. 12B, the to-be-output gradient of the scale layer 2 is not processed, and is directly output to a next scale layer. For a processing process of the next scale layer, refer to the processing process of the scale layer 2. However, scaling scales of the next scale layer may be different.

3: Optimize the adjustment process through inter-layer correction.

In this embodiment of this application, inter-layer correction may be performed in the back propagation direction, and inter-layer correction may also be performed in the forward propagation direction. The following separately describes the inter-layer correction.

1: Inter-layer correction of back propagation.

When the output gradient of the target scale layer is an infinite value or an invalid number, the output gradient of the target scale layer is corrected to a valid value, and the corrected output gradient of the target scale layer is transmitted to an adjacent scale layer of the target scale layer

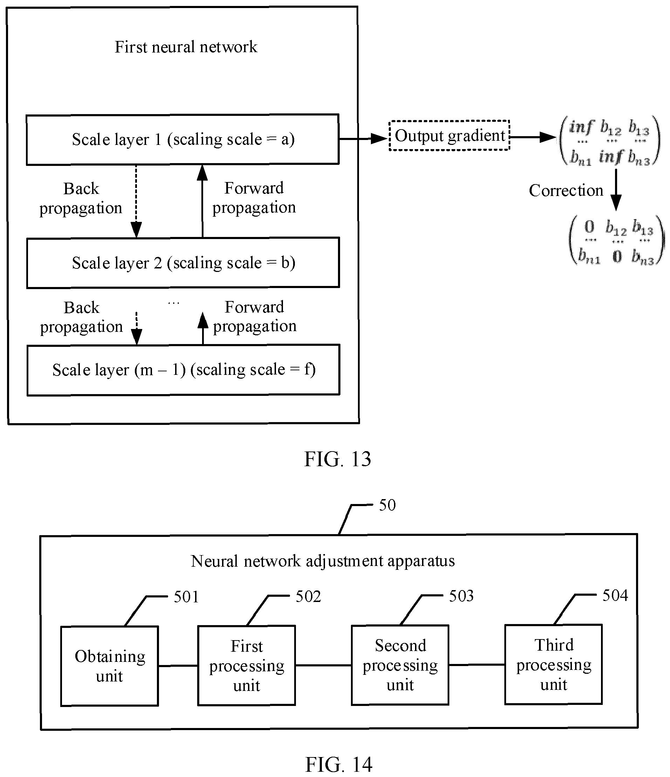

As shown in FIG. 13, when the target scale layer is a scale layer 1, a matrix of an output gradient of the scale layer 1 is $\begin{pmatrix} \inf & b_{12} & b_{13} \\ \dots & \dots & \dots \\ b_{n1} & \inf & b_{n3} \end{pmatrix}$. If two inf appear, the output gradient needs to be corrected. Inf in the matrix may be corrected to 0, and then a corrected output gradient is output, for example, $\begin{pmatrix} 0 & b_{12} & b_{13} \\ \dots & \dots & \dots \\ b_{n1} & 0 & b_{n3} \end{pmatrix}$.

In this embodiment of this application, if the output gradient of the target scale layer is the infinite value or the invalid number, it indicates that the output gradient is not applicable to weight update of an operator in each scale layer, and a weight update step is directly skipped. However, to avoid affecting a subsequent calculation process, the output gradient may be corrected to a valid value within the first precision range, and is transmitted to a next layer for calculation, thereby improving training efficiency of the neural network.

2: Inter-layer correction of forward propagation.

In the forward propagation process, if an eigenvalue of the target scale layer includes an infinite value or an invalid number, skip updating the target scale layer.

In this embodiment of this application, the eigenvalue of the target scale layer is generated at each scale layer in the forward propagation process. In the forward propagation process, whether to update the operator weight in the scale layer may be determined based on performance of the eigenvalue in the expression range of the first precision operation. If a forward feature includes an infinite value or an invalid number, the operator weight does not need to be updated. This helps improve training efficiency of the neural network.

In addition, based on any one of the foregoing embodiments, in this embodiment of this application, the following process may be further performed: when training of the first neural network reaches a preset condition, performing scale layering on the first neural network again to obtain a second neural network.

In this embodiment of this application, the preset condition may be that a quantity of training times reaches a specific threshold, for example, the quantity of training times reaches 300 cycles, or may be that the neural network has been trained to a specific degree, for example, if a difference between scaling scales of each scale layer is less than a preset value, scale layering may be performed on the first neural network again. For a scale layering manner, refer to the foregoing description, a new second neural network is obtained, and the second neural network is trained. This manner of dynamically updating the scale layer can improve training efficiency of the neural network.

The foregoing describes the neural network adjustment method provided in embodiments of this application. The following describes, with reference to the accompanying drawings, a neural network adjustment apparatus provided in embodiments of this application.

As shown in FIG. 14, an embodiment of a neural network adjustment apparatus 50 provided in an embodiment of this application includes the following.

As shown in FIG. 14, the neural network adjustment apparatus 50 includes the following.

An obtaining unit 501 is configured to obtain a first neural network that uses a mixed precision operation, where the first neural network includes a plurality of scale layers, each scale layer has a scaling scale, the scaling scale of each scale layer is a scale used to scale up or down a gradient that is related to each scale layer and that is in a back propagation direction when the first neural network is trained, and the mixed precision operation includes a first precision operation. The obtaining unit 501 may perform step 201 in the method embodiment corresponding to FIG. 4.

A first processing unit 502 is configured to perform forward propagation processing on a training sample input to the first neural network obtained by the obtaining unit 501, to obtain a value of a loss function. The first processing unit 502 may perform step 202 in the method embodiment corresponding to FIG. 4.

A second processing unit 503 is configured to perform, in the back propagation direction, a scaling operation on a first gradient of a first operator in a target scale layer based on a scaling scale of the target scale layer, to obtain a second gradient of the first operator, where the target scale layer is any scale layer in the plurality of scale layers, the first gradient of the first operator comes from the value of the loss function obtained by the first processing unit 502, the scaling operation is a scaling-up operation or a scaling-down operation, and the second gradient of the first operator is used to determine a weight gradient of each operator in the target scale layer. The second processing unit 503 may perform step 203 in the method embodiment corresponding to FIG. 4.

A third processing unit 504 is configured to adjust the scaling scale of the target scale layer based on performance, obtained by second processing unit 503, of the weight gradient of each operator in the target scale layer within an expression range of first precision operation. The third processing unit 504 may perform step 204 in the method embodiment corresponding to FIG. 4.

In this embodiment of this application, in a neural network training process, the scaling operation may be performed on the first gradient of the first operator based on the scaling scale of the scale layer, to calculate the weight gradient of each operator in the scale layer, and then a scaling scale of a corresponding scale layer is adjusted by observing performance of the weight gradient of each operator in an expression range of the first precision operation. In this way, the gradient underflow rate of the first precision operation can be effectively reduced by using a small calculation amount, and mixed precision training can be well applied to neural network training. Training efficiency is improved while high training precision is maintained. In addition, data that uses a low precision operation needs to occupy only small storage space on a chip. This is also conducive to fast reading and writing of data that uses the low precision operation by the chip.

Optionally, the mixed precision operation further includes a second precision operation, where an expression range of the second precision operation is greater than an expression range of the first precision operation; and the obtaining unit 501 is configured to: receive an initial neural network to be trained; mark a first type operator in the initial neural network as an operator that uses the first precision operation, to obtain a network that uses a mixed precision operation, where a second type operator in the network that uses the mixed precision operation uses the second precision operation; and perform scale layering on the network that uses the mixed precision operation, to obtain the first neural network.

Optionally, the obtaining unit 501 is configured to: obtain an initial scale of each network layer in a network that uses a mixed precision operation; and combine network layers with a same initial scale, to obtain a first neural network.

Optionally, the obtaining unit 501 is configured to: obtain an initial scale of each network layer in the network that uses the mixed precision operation; combine network layers with a same initial scale to obtain a layer-combined network; and combine a first scaling operation of an output interface of a first network layer and a second scaling operation of an input interface of a second network layer in the layer-combined network to obtain the first neural network, where the first network layer is adjacent to the second network layer, and the first network layer is a previous layer of the second network layer in the back propagation direction.

Optionally, the obtaining unit 501 is configured to: determine, based on a preset underflow rate, the initial scale of each network layer in the network that uses the mixed precision operation; or receive configuration information for configuring the initial scale of each network layer in the network that uses the mixed precision operation, and determine, based on the configuration information, the initial scale of each network layer in the network that uses the mixed precision operation.

Optionally, the third processing unit 504 is configured to: when the weight gradient of each operator in the target scale layer includes an infinite value or an invalid number, scale down the scaling scale of the target scale layer; or when the weight gradient of each operator in the target scale layer falls within the expression range of the first precision operation, scale up the scaling scale of the target scale layer.

Optionally, the third processing unit 504 is further configured to: when the weight gradient of each operator falls within the expression range of the first precision operation, perform an inverse scaling operation of the scaling operation on the weight gradient of each operator in the target scale layer based on the scaling scale of the target scale layer, to obtain a weight gradient of each operator that is obtained by performing the inverse scaling operation and that is in the target scale layer; and update a weight of each operator in the target scale layer based on the weight gradient of each operator that is obtained by performing the inverse scaling operation and that is in the target scale layer.

Optionally, the third processing unit 504 is further configured to: determine a to-be-output gradient of the target scale layer based on the second gradient of the first operator; and perform an inverse scaling operation of the scaling operation on the to-be-output gradient of the target scale layer based on the scaling scale of the target scale layer, to obtain an output gradient of the target scale layer.

Optionally, the third processing unit 504 is further configured to: when the output gradient of the target scale layer is an infinite value or an invalid number, correct the output gradient of the target scale layer to a valid value within the expression range of the first precision operation; and transmit the corrected output gradient of the target scale layer to an adjacent scale layer of the target scale layer.

Optionally, the third processing unit 504 is further configured to: in the forward propagation process, if an eigenvalue of the target scale layer includes an infinite value or an invalid number, skip updating the target scale layer.

Optionally, the third processing unit 504 is further configured to: when training of the first neural network reaches a preset condition, perform scale layering on the first neural network again to obtain a second neural network.

It should be noted that the obtaining unit 501, the first processing unit 502, the second processing unit 503, and the third processing unit 504 may be implemented by using one unit or module, or by using a plurality of units or modules. This is not limited in this embodiment of this application, provided that the foregoing method procedure can be performed.

For the foregoing neural network adjustment apparatus provided in this embodiment of this application, refer to corresponding content in the foregoing neural network adjustment method part for understanding. Details are not described herein again.

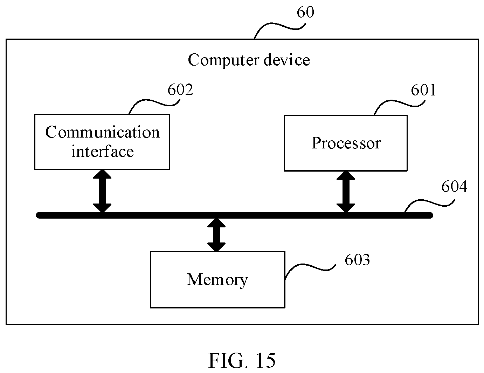

FIG. 15 is a schematic diagram of a possible logical structure of a computer device 60 according to an embodiment of this application. The computer device 60 may be a neural network adjustment apparatus. The computer device 60 includes a processor 601, a communication interface 602, a memory 603, and a bus 604. The processor 601, the communication interface 602, and the memory 603 are connected to each other through the bus 604. In this embodiment of this application, the processor 601 is configured to control and manage an action of the computer device 60. For example, the processor 601 is configured to perform an adjustment process of the neural network in the method embodiments in FIG. 2 to FIG. 13. The communication interface 602 is configured to support the computer device 60 in performing communication. The memory 603 is configured to store program code and data that are of the computer device 60.

The processor 601 may be a central processing unit, a general-purpose processor, a digital signal processor, an application-specific integrated circuit, a field programmable gate array or another programmable logic device, a transistor logic device, a hardware component, or any combination thereof. The processor may implement or execute various example logical blocks, modules, and circuits described with reference to content disclosed in this application. Alternatively, the processor 601 may be a combination of processors implementing a computing function, for example, a combination of one or more microprocessors, or a combination of a digital signal processor and a microprocessor. The bus 604 may be a peripheral component interconnect (Peripheral Component Interconnect, PCI) bus, an extended industry standard architecture (Extended Industry Standard Architecture, EISA) bus, or the like. Buses may be classified into an address bus, a data bus, a control bus, and the like. For ease of representation, only one thick line represents the bus in FIG. 15, but this does not mean that there is only one bus or only one type of bus.

In another embodiment of this application, a computer-readable storage medium is further provided. The computer-readable storage medium stores computer-executable instructions. When a processor of a device executes the computer-executable instructions, the device performs the model training methods in FIG. 3 to FIG. 8, or performs the neural network adjustment methods in FIG. 2-13.

In another embodiment of this application, a computer program product is further provided. The computer program product includes computer-executable instructions, and the computer-executable instructions are stored in a computer-readable storage medium. When a processor of a device executes the computer-executable instructions, the device performs the neural network adjustment method in FIG. 2-13.

In another embodiment of this application, a chip system is further provided. The chip system includes a processor, and the processor is configured to implement the neural network adjustment method in FIG. 2-13. In a possible design, the chip system may further include a memory. The memory is configured to store program instructions and data that are necessary for the inter-process communication apparatus. The chip system may include a chip, or may include a chip and another discrete component.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of embodiments of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in embodiments of this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

In addition, functional units in each embodiment of embodiments of this application may be integrated into one processing unit, or each of the units may exist alone physically, or two or more units are integrated into one unit.

When functions are implemented in the form of a software functional unit and sold or used as an independent product, the functions may be stored in a computer-readable storage medium. Based on such an understanding, the technical solutions of embodiments of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device, or the like) to perform all or some of the steps of the embodiment methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

## Claims

1. A neural network adjustment method, comprising:

   obtaining a first neural network that uses a mixed precision operation, wherein the first neural network comprises a plurality of scale layers, each scale layer has a scaling scale, the scaling scale of each scale layer is a scale used to scale up or down a gradient that is related to each scale layer and that is in a back propagation direction when the first neural network is trained, and the mixed precision operation comprises a first precision operation;

performing forward propagation processing on a training sample input to the first neural network, to obtain a value of a loss function;

performing, in the back propagation direction, a scaling operation on a first gradient of a first operator in a target scale layer based on a scaling scale of the target scale layer, to obtain a second gradient of the first operator, wherein the target scale layer is any scale layer in the plurality of scale layers, the first gradient of the first operator comes from the value of the loss function, the scaling operation is a scaling-up operation or a scaling-down operation, and the second gradient of the first operator is used to determine a weight gradient of each operator in the target scale layer; and

adjusting the scaling scale of the target scale layer based on performance of the weight gradient of each operator in the target scale layer within an expression range of the first precision operation.

2. The adjustment method according to claim 1, wherein the mixed precision operation further comprises a second precision operation, and an expression range of the second precision operation is greater than the expression range of the first precision operation; and

the obtaining a first neural network that uses a mixed precision operation comprises:

receiving an initial neural network to be trained; marking a first type operator in the initial neural network as an operator that uses the first precision operation, to obtain a network that uses the mixed precision operation, wherein a second type operator in the network that uses the mixed precision operation uses the second precision operation; and

performing scale layering on the network that uses the mixed precision operation, to obtain the first neural network.

3. The adjustment method according to claim 2, wherein the performing scale layering on the network that uses the mixed precision operation, to obtain the first neural network comprises:

obtaining an initial scale of each network layer in the network that uses the mixed precision operation; and

combining network layers with a same initial scale, to obtain the first neural network.

4. The adjustment method according to claim 2, wherein the performing scale layering on the network that uses the mixed precision operation, to obtain the first neural network comprises:

obtaining an initial scale of each network layer in the network that uses the mixed precision operation;

combining network layers with a same initial scale to obtain a layer-combined network; and combining a first scaling operation of an output interface of a first network layer and a second scaling operation of an input interface of a second network layer in the layer-combined network to obtain the first neural network, wherein the first network layer is adjacent to the second network layer, and the first network layer is a previous layer of the second network layer in the back propagation direction.

5. The adjustment method according to claim 3 or 4, wherein the obtaining an initial scale of each network layer in the network that uses the mixed precision operation comprises:

determining, based on a preset underflow rate, the initial scale of each network layer in the network that uses the mixed precision operation; or receiving configuration information for configuring the initial scale of each network layer in the network that uses the mixed precision operation, and determining, based on the configuration information, the initial scale of each network layer in the network that uses the mixed precision operation.

6. The adjustment method according to any one of claims 2 to 5, wherein the first type operator comprises a convolution operator and/or a fully connect operator.

7. The adjustment method according to any one of claims 1 to 6, wherein the adjusting the scaling scale of the target scale layer based on performance of the weight gradient of each operator in the target scale layer within an expression range of the first precision operation comprises:

when the weight gradient of each operator in the target scale layer comprises an infinite value or an invalid number, scaling down the scaling scale of the target scale layer; or when the weight gradient of each operator in the target scale layer is within the expression range of the first precision operation, scaling up the scaling scale of the target scale layer.

8. The adjustment method according to any one of claims 1 to 7, wherein the method further comprises:

performing an inverse scaling operation of the scaling operation on the weight gradient of each operator in the target scale layer based on the scaling scale of the target scale layer, to obtain a weight gradient of each operator that is obtained through the inverse scaling operation and that is in the target scale layer; and

updating a weight of each operator in the target scale layer based on the weight gradient of each operator that is obtained through the inverse scaling operation and that is in the target scale layer

9. The adjustment method according to claim 3, wherein the method further comprises:

determining a to-be-output gradient of the target scale layer based on the second gradient of the first operator; and

performing an inverse scaling operation of the scaling operation on the to-be-output gradient of the target scale layer based on the scaling scale of the target scale layer, to obtain an output gradient of the target scale layer.

10. The adjustment method according to claim 9, wherein the method further comprises:

when the output gradient of the target scale layer is an infinite value or an invalid number, correcting the output gradient of the target scale layer to a valid value within the expression range of the first precision operation; and

transmitting the corrected output gradient of the target scale layer to an adjacent scale layer of the target scale layer.

11. The adjustment method according to any one of claims 1 to 10, wherein the method further comprises:

in the forward propagation process, if an eigenvalue of the target scale layer comprises an infinite value or an invalid number, skipping updating the target scale layer.

12. The adjustment method according to any one of claims 1 to 11, wherein the method further comprises:

when training of the first neural network reaches a preset condition, performing scale layering on the first neural network again to obtain a second neural network.

13. A neural network adjustment apparatus, comprising:

an obtaining unit, configured to obtain a first neural network that uses a mixed precision operation, wherein the first neural network comprises a plurality of scale layers, each scale layer has a scaling scale, the scaling scale of each scale layer is a scale used to scale up or down a gradient that is related to each scale layer and that is in a back propagation direction when the first neural network is trained, and the mixed precision operation comprises a first precision operation;

a first processing unit, configured to perform forward propagation processing on a training sample input to the first neural network obtained by the obtaining unit, to obtain a value of a loss function;

a second processing unit, configured to perform, in the back propagation direction, a scaling operation on a first gradient of a first operator in a target scale layer based on a scaling scale of the target scale layer, to obtain a second gradient of the first operator, wherein the target scale layer is any scale layer in the plurality of scale layers, the first gradient of the first operator comes from the value of the loss function, the scaling operation is a scaling-up operation or a scaling-down operation, and the second gradient of the first operator is used to determine a weight gradient of each operator in the target scale layer; and

a third processing unit, configured to adjust the scaling scale of the target scale layer based on performance, obtained by the second processing unit, of the weight gradient of each operator in the target scale layer within an expression range of the first precision operation.

14. The adjustment apparatus according to claim 13, wherein the mixed precision operation further comprises a second precision operation, and an expression range of the second precision operation is greater than the expression range of the first precision operation; and

the obtaining unit is configured to:

receive an initial neural network to be trained;

mark a first type operator in the initial neural network as an operator that uses the first precision operation, to obtain a network that uses the mixed precision operation, wherein a second type operator in the network that uses the mixed precision operation uses the second precision operation; and

perform scale layering on the network that uses the mixed precision operation, to obtain the first neural network.

15. The adjustment apparatus according to claim 14, wherein

the obtaining unit is configured to:

> obtain an initial scale of each network layer in the network that uses the mixed precision operation; and
> combine network layers with a same initial scale, to obtain the first neural network.

16. The adjustment apparatus according to claim 14, wherein
the obtaining unit is configured to:

> obtain an initial scale of each network layer in the network that uses the mixed precision operation;
> combine network layers with a same initial scale to obtain a layer-combined network; and
> combine a first scaling operation of an output interface of a first network layer and a second scaling operation of an input interface of a second network layer in the layer-combined network to obtain the first neural network, wherein the first network layer is adjacent to the second network layer, and the first network layer is a previous layer of the second network layer in the back propagation direction.

17. The adjustment apparatus according to claim 15 or 16, wherein

> the obtaining unit is configured to determine, based on a preset underflow rate, the initial scale of each network layer in the network that uses the mixed precision operation; or
> receive configuration information for configuring the initial scale of each network layer in the network that uses the mixed precision operation, and determine, based on the configuration information, the initial scale of each network layer in the network that uses the mixed precision operation.

18. The adjustment apparatus according to any one of claims 13 to 17, wherein
the third processing unit is configured to:

> when the weight gradient of each operator in the target scale layer comprises an infinite value or an invalid number, scale down the scaling scale of the target scale layer; or
> when the weight gradient of each operator in the target scale layer is within the expression range of the first precision operation, scale up the scaling scale of the target scale layer.

19. The adjustment apparatus according to any one of claims 13 to 18, wherein
the third processing unit is further configured to: perform an inverse scaling operation of the scaling operation on the weight gradient of each operator in the target scale layer based on the scaling scale of the target scale layer, to obtain a weight gradient of each operator that is obtained through the inverse scaling operation and that is in the target scale layer; and update a weight of each operator in the target scale layer based on the weight gradient of each operator that is obtained through the inverse scaling operation and that is in the target scale layer

20. The adjustment apparatus according to claim 15, wherein
the third processing unit is further configured to: determine a to-be-output gradient of the target scale layer based on the second gradient of the first operator; and perform an inverse scaling operation of the scaling operation on the to-be-output gradient of the target scale layer based on the scaling scale of the target scale layer, to obtain an output gradient of the target scale layer.

21. The adjustment apparatus according to claim 20, wherein
the third processing unit is further configured to: when the output gradient of the target scale layer is an infinite value or an invalid number, correct the output gradient of the target scale layer to a valid value within the expression range of the first precision operation; and transmit the corrected output gradient of the target scale layer to an adjacent scale layer of the target scale layer.

22. The adjustment apparatus according to any one of claims 13 to 21, wherein
the third processing unit is further configured to: in the forward propagation process, if an eigenvalue of the target scale layer comprises an infinite value or an invalid number, skip updating the target scale layer.

23. The adjustment apparatus according to any one of claims 13 to 22, wherein
the third processing unit is further configured to: when training of the first neural network reaches a preset condition, perform scale layering on the first neural network again to obtain a second neural network.

24. A computer-readable storage medium, wherein the computer-readable storage medium stores a computer program, and when the computer program is executed by one or more processor, the method according to any one of claims 1 to 12 is implemented.

25. A computing device, comprising one or more processors and a storage medium storing a computer program, wherein

when the computer program is executed by the one or more processors, the method according to any one of claims 1 to 12 is implemented.

26. A chip system, comprising one or more processors, wherein the one or more processors are invoked to perform the method according to any one of claims 1 to 12.

27. A computer program product, comprising a computer program, wherein when being executed by one or more processors, the computer program is used to implement the method according to any one of claims 1 to 12.

Host CPU

External memory

```
Neural network processing unit 10

    Weight memory
         102

    Input memory        Operation circuit
         101                  103

              Vector calculation      Accumulator
                  unit 107                108

Direct memory
  access         Unified memory       Controller      Instruction
controller 105        106                104         fetch buffer
                                                          109

                    Bus interface unit 110
```

FIG. 1

FIG. 2

Initial neural network

Scale layering

Training sample → Model training (scale adjustment)

First neural network

Computer device

Scale adjustment

Target neural network

Terminal device

FIG. 3

Obtain a first neural network that uses a mixed precision operation, where the first neural network includes a plurality of scale layers, and each scale layer has a scaling scale — 201

Perform forward propagation processing on a training sample input to the first neural network, to obtain a value of a loss function — 202

Computer device

Perform, in a back propagation direction, a scaling operation on a first gradient of a first operator in a target scale layer based on a scaling scale of the target scale layer, to obtain a second gradient of the first operator — 203

Adjusts the scaling scale of the target scale layer based on performance of a weight gradient of each operator in the target scale layer within a value range of the first precision operation — 204

FIG. 4

FP16

| 15 | 14 | 13 | 12 | 11 | 10 | 9 | 8 | 7 | 6 | 5 | 4 | 3 | 2 | 1 | 0 |

FP32

| 31 | 30 | 29 | 28 | 27 | 26 | 25 | 24 | 23 | 22 | 21 | 20 | 19 | 18 | 17 | 16 | 15 | 14 | 13 | 12 | 11 | 10 | 9 | 8 | 7 | 6 | 5 | 4 | 3 | 2 | 1 | 0 |

FIG. 5

Inter-layer correction

Note:
⇒
forward
propagation

Initial neural network → Mixed precision → Network that uses a mixed precision operation → Scale layering → First neural network → Forward propagation → Value of a loss function

Intra-layer trial and error and scale adjustment in a back propagation process

/s2  *s2

Note:
⇐--
back
propagation

Inter-layer correction

FIG. 6

Training sample 1    Training sample 2    ...    Training sample n

Network that uses a mixed precision operation (preset underflow rate)

Group 1 (scale value)    Group 2 (scale value)    Group n (scale value)

301

Average

Initial scale value of each network layer

302: Combine layers with a same scale value

302: Combine layers with a same scale value

First neural network

Layer-combined network

303: Combine a scaling operation and an inverse scaling operation of adjacent layers

First neural network

FIG. 7

FIG. 8

EP 4 428 760 A1

EP 4 428 760 A1

| Layer-combined network | First neural network |
|---|---|
| Network layers 1 and 2 (initial scale = a) | Scale layer 1 (scaling scale = a) |
| Network layer 3 (initial scale = b) | b/a  Back propagation  ↓      ↑  Forward propagation |
| ... | Scale layer 2 (scaling scale = b) |
|  | ...  f/e  Back propagation  ↓      ↑  Forward propagation |
| Network layer m (initial scale = f) | Scale layer (m − 1) (scaling scale = f) |

FIG. 9

FIG. 10

EP 4 428 760 A1

401: Initialize an abnormal state bit in a first neural network, and mark the abnormal state bit as 0

402: Traverse operators in each scale layer, and determine a weight gradient of each operator

403: Whether to find, through traversing, that a weight gradient of an operator has an NAN or an INF

Yes → 404: Change the abnormal state bit to 1, and scale down a scaling scale of the scale layer by half of square root of two

No

405: Scale up a scaling scale of the scale layer by $2^{(1/1000)}$

406: Perform i = i + 1, and traverse a next scale layer until all scale layers of the first neural network are traversed

407: If no exception occurs at all layers that are traversed, update an operator weight

FIG. 11

FIG. 12A

CONT.
FROM
FIG. 12A

Second
gradient

Output
gradient 04 → (2) → Output
gradient 05 → (3) → Output
gradient 06 → Scale
down
by b
times → Scale layer 3

Weight gradient S4    Weight gradient S5    Weight gradient S6 → Adjust a scaling scale b

Scale down
by b times          Scale down
by b times          Scale down
by b times

Weight gradient U4    Weight gradient U5    Weight gradient U6

Update                Update                Update

Weight                Weight                Weight

FIG. 12B

EP 4 428 760 A1

First neural network

| | |
|---|---|
| Scale layer 1 (scaling scale = a) | |

Back propagation ··· Forward propagation

Scale layer 2 (scaling scale = b)

Back propagation ··· Forward propagation

Scale layer (m − 1) (scaling scale = f)

Output gradient →

$$\begin{pmatrix} inf & b_{12} & b_{13} \\ \cdots & \cdots & \cdots \\ b_{n1} & inf & b_{n3} \end{pmatrix}$$

Correction ↓

$$\begin{pmatrix} 0 & b_{12} & b_{13} \\ \cdots & \cdots & \cdots \\ b_{n1} & 0 & b_{n3} \end{pmatrix}$$

FIG. 13

50

Neural network adjustment apparatus

501 502 503 504

| Obtaining unit | First processing unit | Second processing unit | Third processing unit |
|---|---|---|---|

FIG. 14

60

FIG. 15

<div align="center">**INTERNATIONAL SEARCH REPORT**</div>

| International application No. |
| --- |
| **PCT/CN2022/138377** |

**A. CLASSIFICATION OF SUBJECT MATTER**

G06N3/08(2023.01)i

According to International Patent Classification (IPC) or to both national classification and IPC

**B. FIELDS SEARCHED**

Minimum documentation searched (classification system followed by classification symbols)

IPC: G06N

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 混合精度, 算子, 尺度, 层, 缩放, 缩小, 放大, 精度, 浮点, 加速, 下溢率, 混合, 训练, 梯度, 权重, training, deep neural network, loss, reduce, weight, scaling

**C. DOCUMENTS CONSIDERED TO BE RELEVANT**

| Category* | Citation of document, with indication, where appropriate, of the relevant passages | Relevant to claim No. |
| --- | --- | --- |
| A | CN 113762502 A (TENCENT TECHNOLOGY (SHENZHEN) CO., LTD.) 07 December 2021 (2021-12-07)<br>claims 1-9, and description, paragraphs [0066]-[0178] | 1-27 |
| A | CN 113435520 A (SHENZHEN SENSETIME TECHNOLOGY CO., LTD.) 24 September 2021 (2021-09-24)<br>entire document | 1-27 |
| A | US 2018322391 A1 (NVIDIA CORPORATION) 08 November 2018 (2018-11-08)<br>entire document | 1-27 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **09 February 2023** | **06 March 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**
Information on patent family members

International application No.

**PCT/CN2022/138377**

| Patent document cited in search report | | | Publication date (day/month/year) | Patent family member(s) | | | Publication date (day/month/year) |
|---|---|---|---|---|---|---|---|
| CN | 113762502 | A | 07 December 2021 | None | | | |
| CN | 113435520 | A | 24 September 2021 | None | | | |
| US | 2018322391 | A1 | 08 November 2018 | WO | 2018204910 | A1 | 08 November 2018 |
| | | | | DE | 102018110947 | A1 | 08 November 2018 |
| | | | | CN | 110073371 | A | 30 July 2019 |

Form PCT/ISA/210 (patent family annex) (July 2022)

**REFERENCES CITED IN THE DESCRIPTION**

**Patent documents cited in the description**

- CN 202111535584